# EUROPEAN PATENT APPLICATION

(11) **EP 4 759 108 A1**
(43) Date of publication of application: **17.06.2026**
(21) Application number: 25223047.9
(22) Date of filing: 12.12.2025
(51) Int. Cl.: A01B 69/04, B60W 40/11

(54) **REMOTE DEVICE**

(30) Priority: 12.12.2024 JP 2024217751
(71) Applicant: KUBOTA CORPORATION, Osaka-shi, Osaka 556-8601 (JP)
(72) Inventor: TOKIEDA, Yoshiki, SAKAI-SHI, OSAKA, 5900908 (JP); HASEBE, Daisuke, SAKAI-SHI, OSAKA, 5900908 (JP); FUJII, Takafumi, SAKAI-SHI, OSAKA, 5900908 (JP)
(74) Representative: Cabinet Beau de Loménie

(57) **Abstract**

A remote device (30) includes a remote manipulator (35) to remotely manipulate a remote working machine (1), and a display (34) to display a captured image of an area in a direction of travel of the remote working machine (1) and a path object (90) indicating an expected travel path of the remote working machine (1) such that the path object (90) is superimposed on the captured image. The display (34) is configured to display the path object (90) in a manner that corresponds to a manner in which a ground surface slopes.

## Description

### BACKGROUND OF THE INVENTION

### Field of the Invention

The present invention relates to remote devices to remotely manipulate remote working machines.

### Description of the Related Art

Some remote control systems are known to generate a monitoring screen for monitoring a manner in which a working vehicle travels and a manner in which the working vehicle performs work and display the monitoring screen on a display (for example, Japanese Unexamined Patent Application Publication No. 2021-36796).

### SUMMARY OF THE INVENTION

The remote control system disclosed in Japanese Unexamined Patent Application Publication No. 2021-36796 is configured to display a plurality of screens showing areas (e.g., front, rear, left, and right areas) around a working vehicle during remote manipulation, but is not able to display a route, or path (expected travel path) along which the working vehicle is expected to travel. Additionally, the remote control system disclosed in Japanese Unexamined Patent Application Publication No. 2021-36796 is not configured to display a manner in which a ground surface slopes on a display screen. It is therefore difficult for a human remote operator to recognize the expected travel path and the manner in which the ground surface slopes. In practice, it is insufficient to assist in remote manipulation.

Example embodiments of the present invention make it possible to assist a human remote operator in remotely manipulating a remote working machine by displaying a path object indicating an expected travel path of the remote working machine and the manner in which the ground surface slopes.

A remote device according to an example embodiment of the present invention includes a remote manipulator to remotely manipulate a remote working machine, and a display to display a captured image of an area in a direction of travel of the remote working machine and a path object indicating an expected travel path of the remote working machine such that the path object is superimposed on the captured image, wherein the display is configured to display the path object in a manner that corresponds to a manner in which a ground surface slopes.

With one or more example embodiments of the present invention, it possible to assist a human remote operator in remotely manipulating a remote working machine by displaying a path object indicating an expected travel path of the remote working machine and the manner in which the ground surface slopes.

The above and other elements, features, steps, characteristics and advantages of the present invention will become more apparent from the following detailed description of the example embodiments with reference to the attached drawings.

### BRIEF DESCRIPTION OF THE DRAWINGS

A more complete appreciation of example embodiments of the present invention and many of the attendant advantages thereof will be readily obtained as the same becomes better understood by reference to the following detailed description when considered in connection with the accompanying drawings described below.
FIG. 1 is a diagram illustrating the configuration of a remote manipulation system in an example embodiment of the present invention.
FIG. 2 is a side view of a tractor as an example remote working machine.
FIG. 3A is a rear perspective view of a coupler.
FIG. 3B is a diagram illustrating example association data.
FIG. 4 is a diagram illustrating an example display screen displayed in response to a first operation performed on a remote manipulator.
FIG. 5 is a diagram illustrating an example display screen displayed in response to a second operation performed on the remote manipulator.
FIG. 6 is a diagram illustrating an example display screen displayed in response to a third operation performed on the remote manipulator.
FIG. 7 is a diagram illustrating an example table.
FIG. 8A is a diagram illustrating an example display screen in which a manner in which a path object is displayed is changed based on a manner in which a ground surface slopes.
FIG. 8B is a diagram for explaining the path object displayed on the display screen when the remote working machine is traveling from a downhill slope to a flat ground surface.
FIG. 8C is a diagram for explaining the path object displayed on the display screen when the remote working machine is traveling from the flat ground surface to an uphill slope.
FIG. 9 is a flowchart illustrating a display process for a display screen in a remote device.
FIG. 10 is a diagram illustrating other example display screens.
FIG. 11 is a diagram explaining how to change a threshold angle depending on whether the ground surface is a paved surface or an unpaved surface in a second example embodiment.
FIG. 12A is a diagram illustrating an example display screen in which a steering object is displayed in a manner that corresponds to a safe level of the direction of steering in a third example embodiment.
FIG. 12B is a diagram illustrating an example display screen in which the steering object is displayed in a manner that corresponds to the safe level of the direction of steering in the third example embodiment.
FIG. 12C is a diagram illustrating an example display screen in which the steering object is displayed in a manner that corresponds to the safe level of the direction of steering in the third example embodiment.
FIG. 13 is a diagram explaining, for example, a slope rollover speed of the remote working machine traveling across a sloping ground.
FIG. 14 is a diagram illustrating slope-rollover-speed characteristics.
FIG. 15 is a diagram illustrating display examples of the path object used to display a pitch angle and a roll angle of the remote working machine in a variation.
FIG. 16 is a table illustrating an example in which the degrees of pitch and roll of the remote working machine are displayed with the path object.

### DESCRIPTION OF THE EXAMPLE EMBODIMENTS

Example embodiments will now be described with reference to the accompanying drawings, wherein like reference numerals designate corresponding or identical elements throughout the various drawings. The drawings are to be viewed in an orientation in which the reference numerals are viewed correctly.

Example embodiments of the present invention will be described below with reference to the drawings.

### First Example Embodiment

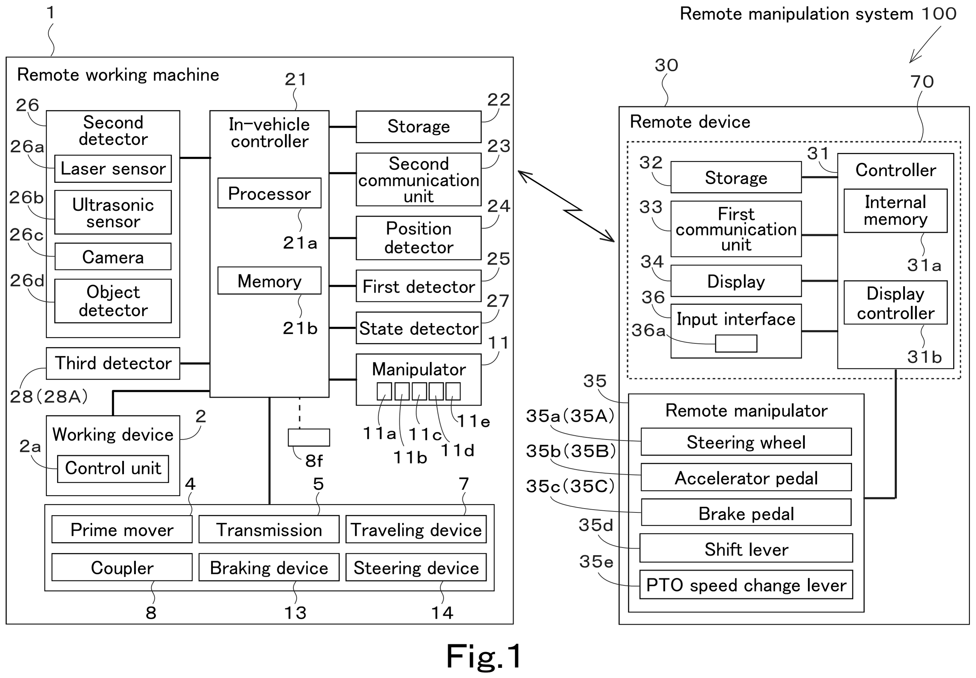

FIG. 1 is a diagram illustrating the configuration of a remote device 30 in an example embodiment of the present invention and the configuration of a remote manipulation system 100 including the remote device 30. The remote manipulation system 100 includes the remote device 30 and a remote working machine 1. The remote manipulation system 100 and the remote device 30 are configured to remotely manipulate (or remotely operate) the remote working machine 1 and remotely monitor the remote working machine 1.

The remote working machine 1 is an agricultural machine (also referred to as a "remotely manipulated agricultural machine") to be remotely driven (caused to, for example, travel and perform work) by the remote device 30. The remote working machine 1 includes an agricultural machine, such as a tractor equipped with (or supporting) a working device 2 such as an implement, a rice planter, or a combine for harvesting. In the following description, a tractor will be described as an example of the remote working machine 1, and the explanation of other agricultural machines will be omitted. Additionally, although the remote working machine 1 is a tractor including an operator's seat 10 in which an operator (worker) is to sit, the remote working machine 1 may be an agricultural machine (e.g., a tractor) dedicated to remote manipulation that is not equipped with the operator's seat 10.

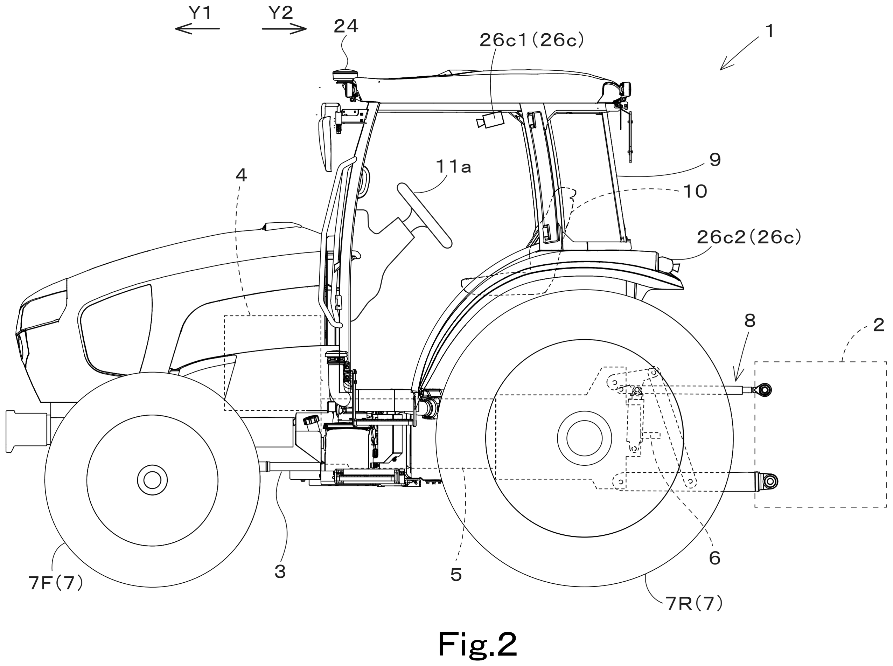

FIG. 2 is a side view of a tractor as an example of the remote working machine 1. Hereinafter, a direction extending forward from the operator sitting in the operator's seat 10 of the remote working machine 1 (i.e., a direction indicated by arrow Y1 in FIG. 2) will be described as a forward direction, a direction extending rearward from the operator (i.e., a direction indicated by arrow Y2 in FIG. 2) will be described as a rearward direction, a direction extending leftward from the operator will be described as a leftward direction (near side in FIG. 2), and a direction extending rightward from the operator will be described as a rightward direction (far side in FIG. 2). Additionally, a horizontal direction orthogonal to a front-rear direction of the remote working machine 1 will be described as a width direction. The remote working machine 1 includes a machine body 3. The machine body 3 includes a traveling device 7. The traveling device 7 includes front wheels 7F and rear wheels 7R arranged on opposite or left and right sides of the machine body 3, and supports the machine body 3 such that the machine body 3 can travel. The traveling device 7 may be a crawler type device.

As illustrated in FIGS. 1 and 2, a prime mover 4, a transmission 5, a braking device 13, and a steering device 14 are mounted on the machine body 3. The prime mover 4 includes an engine, such as a diesel engine or a gasoline engine, or an electric motor. The transmission 5 performs, for example, a speed-stage changing operation to change a propelling force of the traveling device 7 and switches the traveling device 7 between forward movement and rearward movement. The transmission 5 includes a plurality of gears for transmitting power, a shifter for changing connection of the gears, and a clutch for switching between transmission and disconnection of power, and performs the speed-stage changing operation using these elements. Additionally, the transmission 5 is configured to switch a travel mode between a four-wheel drive (4WD) equal-speed state in which the front wheels 7F and the rear wheels 7R, or four wheels, are driven by power and a rotation speed of the front wheels 7F is substantially the same as that of the rear wheels 7R, a 4WD increased-speed state in which the four wheels are driven and the rotation speed of the front wheels 7F is higher than that of the rear wheels 7R, and a two-wheel drive (2WD) mode in which only the rear wheels 7R are driven. In the present example embodiment, the transmission 5 is capable of performing speed-stage changing operations independently in a main-transmission section (e.g., a continuously variable transmission) and an auxiliary transmission section (e.g., a stepped transmission).

Additionally, the transmission 5 transmits power from the prime mover 4 to a power take-off (PTO) shaft 6. The PTO shaft 6 is rotated by power from the prime mover 4. The PTO shaft 6 is an output shaft to drive the working device 2 when connected to the working device 2. The working device 2 receives a rotational drive force transmitted from the PTO shaft 6.

A manipulator 11 to manually operate the remote working machine 1 is provided around the operator's seat 10. Although the remote working machine 1 is configured to travel and perform work without human intervention, the operator in the operator's seat 10 can operate the manipulator 11 to cause the remote working machine 1 to travel and cause the working device 2 to perform work. The manipulator 11 includes a steering wheel 11a, an accelerator pedal 11b, a brake pedal 11c, a shift lever 11d, and a PTO speed change lever 11e. The PTO speed change lever 11e is a lever to set a rotation speed of the PTO shaft 6 based on an operation by the operator.

The braking device 13 controls the motion of the machine body 3 based on an operation on the brake pedal 11c. The steering device 14 operates, based on an operation on the steering wheel 11a, the machine body 3 such that the machine body 3 is oriented in a predetermined direction.

A coupler 8 (raising/lowering device) is provided in or on a rear portion of the machine body 3. The coupler 8 includes a three-point linkage. The coupler 8 is configured to couple the working device 2 to the machine body 3 such that the working device 2 is attachable to and detachable from the machine body 3. The remote working machine 1 (machine body 3) is configured to tow the working device 2 when the traveling device 7 is caused to travel with the working device 2 coupled to the coupler 8. Additionally, the coupler 8 is configured to raise and lower the working device 2 and change the posture of the working device 2 when driven by an actuator (e.g., a hydraulic cylinder).

Examples of the working device 2 include a cultivator to cultivate soil, a fertilizer spreader to spread fertilizer, an agricultural chemical spreader to spread agricultural chemicals, a harvester for harvesting, a mower to mow grass or the like, a tedder to ted grass or the like, a rake to rake grass or the like, and a baler to bale grass or the like. The remote working machine 1 is configured to cause the working device 2 to perform agricultural work in an agricultural field.

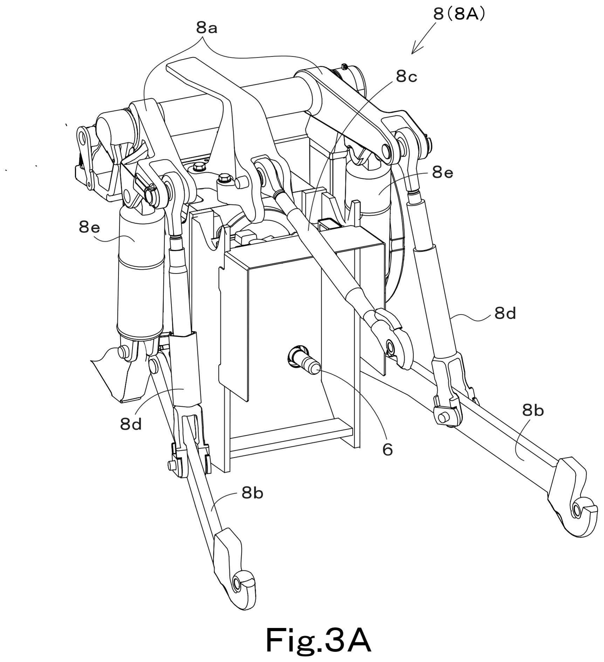

FIG. 3A is a rear perspective view of the coupler 8. As illustrated in FIG. 3A, the coupler 8 includes lift arm(s) 8a, lower link(s) 8b, a top link 8c, lift rod(s) 8d, and lift cylinder(s) 8e. A front end portion of each of the lift arms 8a is supported by a rear upper portion of a case (transmission case) accommodating the transmission 5 such that the lift arm 8a is pivotable upward or downward. The lift arms 8a are pivoted (raised or lowered) by driving the lift cylinders 8e. Each of the lift cylinders 8e includes a hydraulic cylinder. The lift cylinder 8e is connected to a hydraulic pump via a control valve 8f (see FIG. 1). The control valve 8f is, for example, a solenoid valve, and is configured to extend and contract the lift cylinder 8e.

A front end portion of each of the lower links 8b is supported by a rear lower portion of the transmission 5 such that the lower link 8b is pivotable upward or downward. A front end portion of the top link 8c is supported by a rear portion of the transmission 5 that is located higher than the lower links 8b such that the top link 8c is pivotable upward or downward. Each of the lift rods 8d couples the lift arm 8a and the lower link 8b. Rear portions of the lower links 8b and a rear portion of the top link 8c are coupled to the working device 2. When each of the lift cylinders 8e is driven (extended or contracted), the lift arm 8a is raised or lowered, and the lower link 8b coupled to the lift arm 8a via the lift rod 8d is also raised or lowered. Thus, the working device 2 is pivoted upward or downward (raised or lowered) with a front portion of the lower link 8b as a fulcrum.

As illustrated in FIG. 1, the remote working machine 1 includes an in-vehicle controller 21, a storage 22, a second communication unit (in-vehicle communication unit) 23, a position detector 24, a first detector (inertial measurement unit) 25, a second detector (sensing assembly) 26, a state detector 27, and a third detector 28. Additionally, an in-vehicle network such as CAN, LIN, or FlexRay is provided in the remote working machine 1. The in-vehicle controller 21 is electrically connected to the storage 22, the second communication unit 23, the position detector 24, the first detector 25, the second detector 26, the state detector 27, the third detector 28, and the like.

The in-vehicle controller 21 includes an electronic control unit (ECU) including a processor 21a and a memory 21b. The in-vehicle controller 21 is a controller to control operations of elements of the remote working machine 1. The memory 21b includes a volatile or nonvolatile memory. The in-vehicle controller 21 controls an actuator group including electric or hydraulic motors, cylinders, and control valves to actuate elements of the remote working machine 1, for example, the prime mover 4, the transmission 5, the traveling device 7, the braking device 13, and the coupler 8. The memory 21b of the in-vehicle controller 21 stores various pieces of information and data, which are readable and writable, used to control the operations of elements of the remote working machine 1 through the in-vehicle controller 21. The storage 22 is, for example, a solid-state drive (SSD), a hard disk drive (HDD), or the like.

The second communication unit 23 includes an antenna, an integrated circuit (IC), and an electric circuit for wireless communication via a mobile communication network, the Internet, or a wireless local area network (LAN). The in-vehicle controller 21 wirelessly communicates with the remote device 30 through the second communication unit 23. Additionally, the in-vehicle controller 21 includes a real-time clock (RTC) to count date and time.

The present example embodiment has described the example in which the remote working machine 1 and the remote device 30 communicate via a mobile communication network or the like. In another example, for example, the remote working machine 1 and the remote device 30 may communicate via a mobile communication network or the like through an external device such as a server or a repeater. Additionally, the remote working machine 1 and the remote device 30 may directly communicate using short-range wireless signals, such as Bluetooth (registered trademark) Low Energy (BLE) signals or ultra-high frequency (UHF) signals. In this case, each of the second communication unit 23 and the remote device 30 may include an interface for short-range wireless communication.

The position detector 24 detects its own position (measured position information including a latitude and a longitude) using a satellite positioning system. More specifically, the position detector 24 receives signals indicating the positions of the positioning satellites, transmission times, correction information, and the like from positioning satellites, and detects its own position based on the signals. The position detector 24 may detect, as its own position, a position corrected based on a signal for correction or the like from a base station (reference station) configured to receive signals from the positioning satellites. Additionally, the position detector 24 may calculate the position of the remote working machine 1 based on its own position detected and profile (outer shape) information on the remote working machine 1 stored in advance. Additionally, the position detector 24 may calculate the position of the working device 2 based on its own position detected, profile information on the working device 2 stored in advance, and an attached position of the working device 2 relative to the machine body 3.

The first detector 25 includes a gyroscope sensor or an acceleration sensor and detects a roll angle, a pitch angle, a yaw angle, and the like of the remote working machine 1 (machine body 3). In other words, the first detector 25 detects a tilt attitude of the remote working machine 1 in left-right and front-rear directions relative to a horizontal state.

The second detector 26 is a sensing assembly to sense (monitor) an area around the remote working machine 1. More specifically, the second detector 26 includes at least one laser sensor 26a, at least one ultrasonic sensor 26b, at least one camera 26c, and an object detector 26d. In the present example embodiment, the second detector 26 includes a plurality of laser sensors 26a and a plurality of ultrasonic sensors 26b. The laser sensors 26a and the ultrasonic sensors 26b are installed on predetermined portions, such as front, rear, left, and right portions of the remote working machine 1, to detect surrounding conditions of the remote working machine 1 and objects in areas surrounding the remote working machine 1, including in front of, behind, and to the left and right of the remote working machine 1. For example, the laser sensors 26a and the ultrasonic sensors 26b are installed at predetermined positions on the machine body 3 so that an object located within a predetermined object detection distance from the remote working machine 1 and located lower than the machine body 3 can be detected.

The laser sensors 26a and the ultrasonic sensors 26b are example object sensors. The second detector 26 may include, as object sensors, at least the laser sensors 26a or the ultrasonic sensors 26b. Additionally, the second detector 26 may include other object sensors.

Each of the laser sensors 26a includes an optical sensor such as a light detection and ranging (LiDAR) sensor. The laser sensor 26a emits millions of pulsed measurement light (laser light) per second from a light source such as a laser diode, and scans the light in a horizontal or vertical direction by reflecting the measurement light with a rotating mirror, thus projecting the light onto a predetermined detection range (sensing range). The laser sensor 26a then receives reflected light from an object, which is irradiated with the measurement light, through a light-receiving element.

The object detector 26d includes an electric circuit or IC to detect, based on a received-light signal output from the light-receiving element of the laser sensor 26a, the presence or absence of an object, the position of the object, the type of the object, and the like. The object detector 26d detects a distance to the object based on a time between emission of measurement light from the laser sensor 26a and reception of reflected light (time-of-flight (TOF) method). Objects to be detected by the object detector 26d include agricultural fields in which the remote working machine 1 is to travel and perform work, crops in the agricultural fields, a ground surface, the gradient of the ground surface, other objects, and humans.

Each of the ultrasonic sensors 26b includes an airborne ultrasonic sensor, such as a sonar. The ultrasonic sensor 26b emits measurement waves (ultrasonic waves) to the predetermined detection range through a transmitter and receives reflected waves, which are produced by the measurement waves reflected by an object, through a receiver. The object detector 26d detects, based on a signal output from the receiver of the ultrasonic sensor 26b, the presence or absence of an object, the position of the object, the type of the object, and the like. Additionally, the object detector 26d detects a distance to the object based on a time between emission of measurement waves from the ultrasonic sensor 26b and reception of reflected waves (TOF method).

The camera 26c includes a charge-coupled device (CCD) camera including a CCD image sensor or a complementary metal oxide semiconductor (CMOS) camera including a CMOS image sensor. As illustrated in FIG. 2, a plurality of cameras 26c are installed in and/or on predetermined portions, such as the front, rear, left, and right portions of the remote working machine 1 and the interior of a cabin 9, to capture images of areas in front of, behind, to the left and right, and the like of the remote working machine 1 and output data indicating the captured images. The cameras 26c are example imagers.

For example, as illustrated in FIG. 2, a camera 26c1 installed in the interior of the cabin 9 captures an image of the area in front of the remote working machine 1 from the operator's seat 10. More specifically, the camera 26c1 captures an image of the area in front of the remote working machine 1 (in the direction of travel or Y1 direction) with substantially the same field of view as that of the operator in the operator's seat 10. In other words, an image of an area in the direction of travel of the remote working machine 1 can be captured through the camera 26c1.

As illustrated in FIG. 2, a camera 26c2 installed on the rear portion of the machine body 3 of the remote working machine 1 captures an image of the area behind the remote working machine 1. More specifically, the camera 26c2 captures an image of the area in a direction (indicated by arrow Y2) opposite to the direction of the field of view of the operator in the operator's seat 10. In other words, an image of an area in the direction opposite to the direction of travel of the remote working machine 1 can be captured through the camera 26c2.

The object detector 26d can also detect, based on data indicating the captured images output from the cameras 26c, the presence or absence of an object, the position of the object, the type of the object, and the like.

The second detector 26 senses (monitors) surrounding conditions of the remote working machine 1 and the working device 2 through the laser sensors 26a, the ultrasonic sensors 26b, the cameras 26c, and the object detector 26d, and outputs sensing information indicating the result of sensing to the in-vehicle controller 21. The sensing information contains at least detection information from the object detector 26d, data indicating the captured images from the cameras 26c, and the gradients of surrounding areas. Additionally, the sensing information may contain detection information from the laser sensors 26a and detection information from the ultrasonic sensors 26b.

The state detector 27 detects an operation state of the remote working machine 1. Specifically, the state detector 27 includes various sensors installed in or on respective portions of the remote working machine 1 (machine body 3) and a computing unit, which is configured to detect (calculate) the operation state of the remote working machine 1 based on output signals from the various sensors. The state of the remote working machine 1 detected by the state detector 27 includes drive and stop states of elements of the remote working machine 1, the direction of travel of the remote working machine 1, a speed of travel thereof, an acceleration thereof, an angle of steering thereof, and the like.

The state detector 27 may acquire the position of the machine body 3 (the position of the remote working machine 1) detected by the position detector 24 at predetermined intervals, detect (calculate) the position of the working device 2 based on the position of the machine body 3, and detect a change (shift) in the position of the machine body 3. Additionally, the state detector 27 may detect a speed of travel of the machine body 3 based on a change in the position of the machine body 3. In another example, a rotation speed sensor may be provided to detect either a rotation speed of the front and rear wheels 7F and 7R of the traveling device 7 or a rotation speed of a traveling motor to rotate the front and rear wheels 7F and 7R. The state detector 27 may detect the speed of travel of the machine body 3 based on an output signal from the rotation speed sensor. Additionally, the steering device 14 may include a sensor, and the state detector 27 may detect an angle of steering of the machine body 3 based on an output signal from the sensor.

The state detector 27 generates detection information indicating the detected operation state of the remote working machine 1 and outputs the detection information to the in-vehicle controller 21. For example, the detection information of the state detector 27 contains manipulation information about the remote working machine 1 and the working device 2. The manipulation information contains, for example, at least one or more pieces of information indicating the speed (or acceleration) of the remote working machine 1, a speed stage of the transmission 5, a braking position of the braking device 13, an operation position of the working device 2, or the angle of steering of the machine body 3.

The third detector 28 (detector 28A) detects a state of the working device 2. The third detector 28 (detector 28A) detects, as the state of the working device 2, at least one of a first state relating to the position of the working device 2 (e.g., a height of the working device 2) or a second state relating to the operation of the working device 2 (e.g., a rotation speed of the PTO shaft 6).

The third detector 28 includes various sensors installed in or on respective portions of the coupler 8 and the working device 2 and a computing unit, which is configured to detect (calculate) the operation state of the working device 2 based on output signals from the various sensors. The state of the working device 2 detected by the third detector 28 includes a type of the working device 2, an attached or detached state of the working device 2, drive and stop states of elements of the working device 2, an inclination of the working device 2, a height of the working device 2 (e.g., a height thereof relative to the ground or a height thereof relative to the remote working machine 1), and a rotation speed of the PTO shaft 6.

For example, the PTO shaft 6 may be equipped with a rotation sensor, and the third detector 28 (detector 28A) may detect a rotation speed of the PTO shaft 6 based on an output signal from the rotation sensor. The third detector 28 (detector 28A) may include a PTO rotation speed sensor to detect a rotation speed of the PTO shaft 6, and acquire the rotation speed of the PTO shaft 6 detected by the PTO rotation speed sensor.

In a case that the type of the remote working machine 1 is a rice planter, the third detector 28 may detect, based on output signals from various sensors arranged in or on respective portions of a seedling planting device or the like, drive and stop states of respective mechanisms for seedling planting, remaining amounts of materials (seedlings and fertilizer), and the like. In a case that the type of the remote working machine 1 is a combine, the third detector 28 may detect, based on output signals from various sensors arranged in or on respective portions of a mover, a grain tank, or the like, drive and stop states of respective mechanisms for harvesting, characteristics of harvested grain, or the like.

Each of the position detector 24, the first detector 25, the state detector 27, and the third detector 28 outputs detection information indicating detection results obtained at predetermined intervals or at predetermined timings to the in-vehicle controller 21 as needed. Additionally, the second detector 26 also outputs sensing information indicating sensing results obtained at predetermined intervals or at predetermined timings to the in-vehicle controller 21 as needed. The in-vehicle controller 21 stores the detection information and the sensing information received from the position detector 24, the state detector 27, the third detector 28, and the second detector 26 in the memory 21b included therein.

For example, for remote driving, the in-vehicle controller 21 sequentially transmits the detection information and the sensing information stored in the internal memory 21b to the remote device 30 through the second communication unit 23 at predetermined intervals or at predetermined timings.

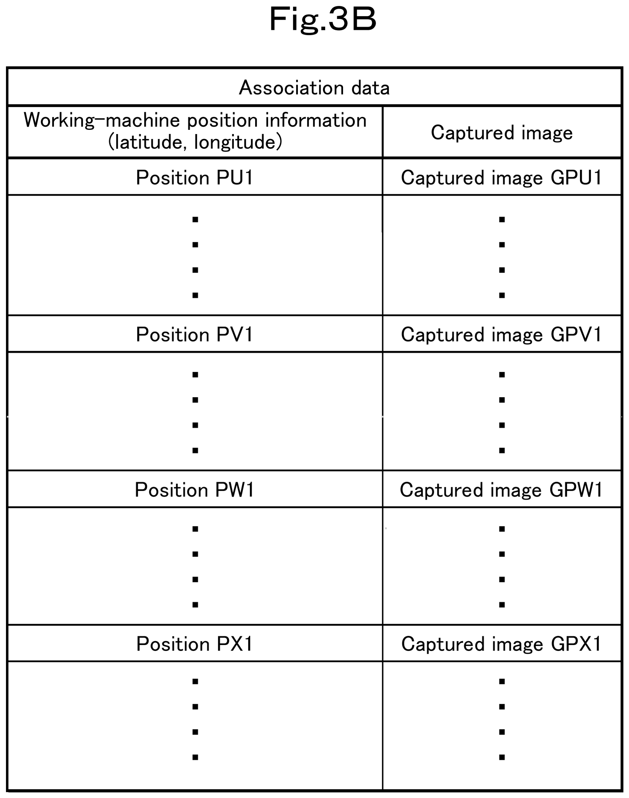

The detection information and the sensing information, transmitted from the remote working machine 1 in the above-described manner, contain association data associating position information on the remote working machine 1 with a captured image of an area in the direction of travel of the remote working machine 1 (see FIG. 3B). FIG. 3B is a diagram illustrating example association data. In other words, association data associating detection information of the position detector 24 (i.e., position information on the remote working machine 1) with sensing information of the second detector 26 (e.g., an image captured by the camera 26c1) is sequentially transmitted to the remote device 30. As for captured images, as illustrated in FIG. 3B, pieces of association data associating position information on the remote working machine 1 detected by the position detector 24 (e.g., positions PU1, PV1, PW1, and PX1) with images captured by the camera 26c1 (e.g., captured images GPU1, GPV1, GPW1, and GPX1) are sequentially transmitted to the remote device 30.

Additionally, the in-vehicle controller 21 communicates with a control unit 2a included in the working device 2 to cause the control unit 2a to control an operation of the working device 2. In other words, the in-vehicle controller 21 controls the operation of the working device 2 through the control unit 2a to perform work in an agricultural field. For example, the control unit 2a includes a central processing unit (CPU) and a memory. Some working devices 2 are equipped with no control unit 2a. In this case, the in-vehicle controller 21 causes the coupler 8 to control the posture of the working device 2 and causes the working device 2 to perform work in an agricultural field.

The in-vehicle controller 21 controls, based on pieces of detection information and the like acquired from the first detector 25, the second detector 26, the state detector 27, the third detector 28, and the like, travel of the remote working machine 1, work that is performed by the working device 2, and other operations of the remote working machine 1. Additionally, when receiving a remote manipulation signal from the remote device 30 through the second communication unit 23, the in-vehicle controller 21 controls travel of the remote working machine 1, work performed by the working device 2, and other operations of the remote working machine 1 based on the remote manipulation signal in addition to the above-described pieces of information.

Furthermore, to control travel of the remote working machine 1 or work performed by the working device 2, the in-vehicle controller 21 determines, based on detection information of the object detector 26d, whether or not an object may approach the remote working machine 1 or the working device 2 within a predetermined distance and come into contact therewith. In response to determining that an object may approach the remote working machine 1 or the working device 2 within the predetermined distance and come into contact therewith, the in-vehicle controller 21 controls the traveling device 7, the working device 2, or the like, and automatically stops travel of the remote working machine 1 or work to avoid contact with the object.

The remote device 30 will now be described. As illustrated in FIG. 1, the remote device 30 is located apart from the remote working machine 1. The remote device 30 is configured to remotely manipulate the remote working machine 1 in response to manipulation by a human remote operator (operator) and monitor a state of the remote working machine 1, the surrounding conditions of the remote working machine 1, and the like. The remote device 30 includes a controller 31, a storage 32, a first communication unit 33, a display 34, a remote manipulator 35, and an input interface 36.

The controller 31 is a processor to control operations of elements of the remote device 30. The processor executes, for example, a remote control program stored in the storage 32, thus serving as the controller 31 to control the operations of elements of the remote device 30. The controller 31 may be implemented by hardware on an IC (IC chip) or the like, or may be implemented by software using a computer. In the latter case, the computer includes a recording medium on which a program, which is software for implementing functions of the controller 31, and various pieces of data relating to the remote working machine 1 are recorded and are readable by the computer, an arithmetic circuit such as a CPU that executes instructions of the program, and a random access memory (RAM) that develops the program and the various pieces of data. The arithmetic circuit reads the program from the recording medium and executes the program, thus implementing the functions of the controller 31.

The controller 31 includes an internal memory 31a, which is a volatile or nonvolatile memory. The internal memory 31a stores various pieces of information and data, which are readable and writable, used to control the operations of elements of the remote device 30 through the controller 31.

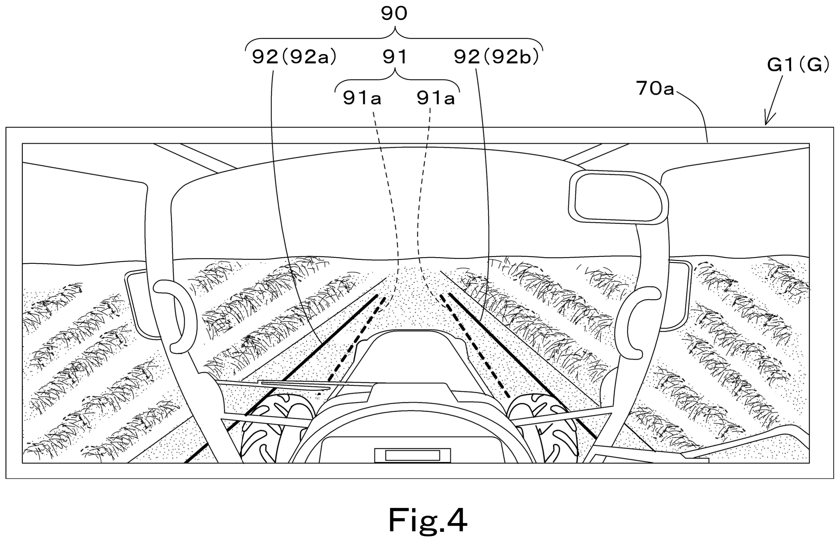

The controller 31 includes a display controller 31b. For example, the above-described processor executes a display control program stored in the storage 32 or the internal memory 31a, thus serving as the display controller 31b. Additionally, the display controller 31b may include hardware on an IC (IC chip) or the like. The display controller 31b has a function of controlling a display screen G displayed by the display 34. For example, the display controller 31b causes the display 34 to display the display screen G (refer to, for example, FIG. 4, which will be described later) representing information relating to remote driving.

The storage 32 stores in advance applications, such as the remote control program for remotely driving the remote working machine 1 and a remote monitoring program for remotely monitoring the remote working machine 1, and various pieces of data. The storage 32 is, for example, an SSD, an HDD, or the like.

The first communication unit 33 includes an antenna, an IC, and an electric circuit for wireless communication via a mobile communication network, the Internet, or a wireless LAN. The first communication unit 33 is configured to wirelessly communicate with the remote working machine 1 under the control of the controller 31. The first communication unit 33 receives various pieces of data (pieces of detection information of the position detector 24, the first detector 25, the state detector 27, and the third detector 28, sensing information of the second detector 26, and the like) from the second communication unit 23. For example, the first communication unit 33 receives association data associating position information on the remote working machine 1 with a captured image of an area in the direction of travel of the remote working machine 1.

The display 34 is, for example, a liquid crystal display or an organic light-emitting diode (OLED) display. The display 34 displays various pieces of information used to remotely operate the remote working machine 1. For example, the display 34 displays the display screen G representing information relating to remote driving based on display control by the display controller 31b (display control signal). The display screen G will be described in detail later.

The input interface 36 is an interface to operate the remote device 30. The human remote operator can input a predetermined instruction to the remote device 30 by operating the input interface 36. The input interface 36 includes a switch operation actuator 36a to output a switch command in response to, for example, a display switching operation for the display 34. The input interface 36 may be a touch panel provided for the display 34 and may detect a touch on the display 34. The input interface 36 may include a hardware switch (physical switch).

The remote manipulator 35 is a device to remotely manipulate the remote working machine 1. The remote manipulator 35 includes a steering wheel 35a, an accelerator pedal 35b, a brake pedal 35c, a shift lever 35d, and a PTO speed change lever 35e. These components are arranged around a remote operator's seat. The PTO speed change lever 35e is a lever to set the rotation speed of the PTO shaft 6 based on an operation by the human remote operator. The remote manipulator 35 accepts an operation by the human remote operator. The human remote operator in the remote operator's seat operates the remote manipulator 35 to remotely manipulate travel of the remote working machine 1 or work performed by the working device 2. Additionally, the human remote operator monitors the surrounding conditions of the remote working machine 1 by using the display 34. Additionally, the human remote operator can input predetermined information or an instruction to the remote device 30 by operating the remote manipulator 35. The remote manipulator 35 may be, for example, a touch pad or a hardware switch.

The remote device 30 may include the remote manipulator 35 and a display terminal 70, as illustrated in FIG. 1. In other words, the display terminal 70 may be a terminal device including the controller 31, the storage 32, the first communication unit 33, the display 34, and the input interface 36. Examples of the display terminal 70 include a portable terminal device, such as a tablet device or a smartphone, and a desktop computer installed in a base station.

When the human remote operator operates the remote manipulator 35 to input an operation instruction for the remote working machine 1, the controller 31 generates a remote manipulation signal corresponding to the operation instruction, and causes the first communication unit 33 to transmit the remote manipulation signal to the remote working machine 1. In other words, the remote manipulation signal corresponding to operations on the steering wheel 35a, the accelerator pedal 35b, the brake pedal 35c, the shift lever 35d, and the PTO speed change lever 35e is transmitted to the remote working machine 1. In response to receiving, at the second communication unit 23, the remote manipulation signal from the remote device 30, the in-vehicle controller 21 of the remote working machine 1 causes elements of the remote working machine 1 to operate based on the remote manipulation signal, detection information of the position detector 24, sensing information of the second detector 26, and detection information of the state detector 27, thus controlling travel and steering of the remote working machine 1 and a working operation of the working device 2.

Additionally, the in-vehicle controller 21 periodically transmits pieces of detection information of the position detector 24, the first detector 25, the state detector 27, and the third detector 28 and sensing information of the second detector 26 to the remote device 30 through the second communication unit 23. In response to receiving, at the first communication unit 33, the pieces of detection information and the sensing information, the controller 31 of the remote device 30 stores the received pieces of information in the internal memory 31a and causes the display 34 to display the pieces of information.

The controller 31 allows the display 34 to display the display screen G representing information relating to remote driving. The display 34 displays the display screen G based on a display control signal from the controller 31 (display controller 31b). More specifically, the display controller 31b converts information relating to remote driving into a data format (image) that can be displayed on the display 34. The display controller 31b outputs, to the display 34, a display control signal that designates the converted image and a display position of the image on the display 34, thus causing the display 34 to display the display screen G.

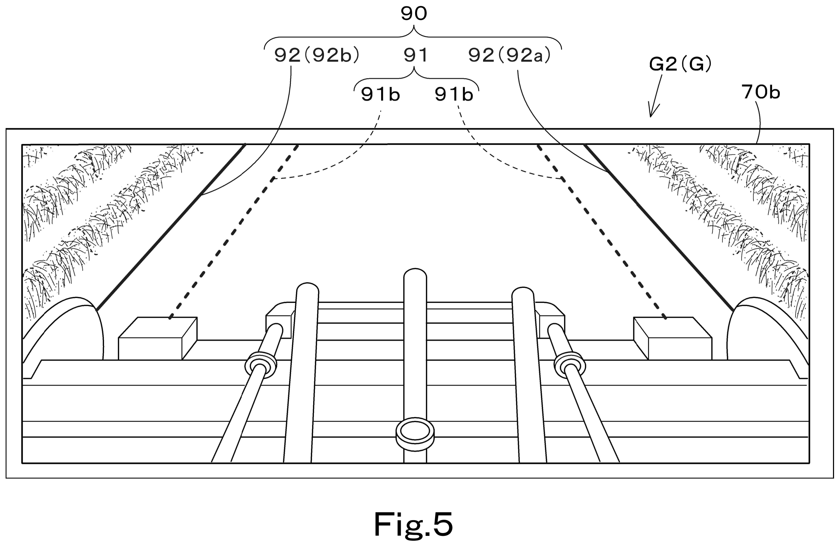

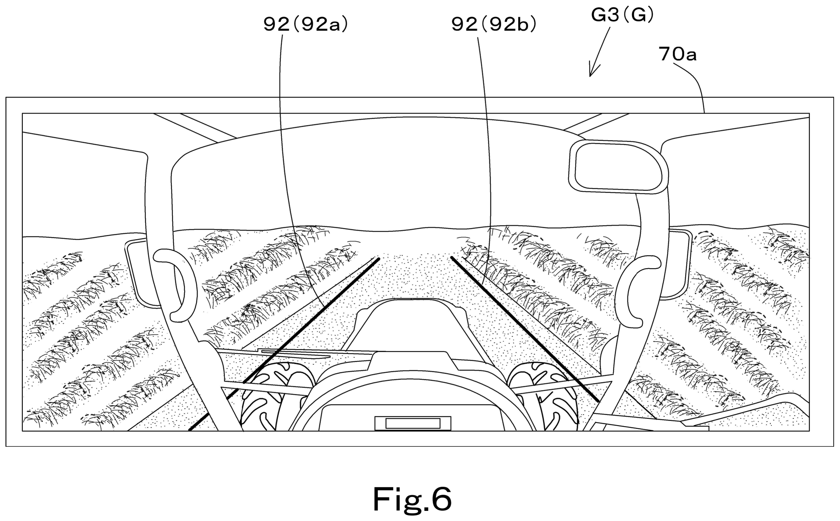

FIGS. 4 to 6 are diagrams illustrating example display screens G. As illustrated in a display screen G1 of FIG. 4 and a display screen G3 of FIG. 6, the display controller 31b causes the display 34 to display a first captured image 70a of an area in front of the remote working machine 1. The first captured image 70a is an image obtained by capturing, from the viewpoint of the operator, an image of the area in front of the remote working machine 1 through the camera 26c1 (FIG. 2), which is installed in the cabin 9, of the cameras 26c provided in and on the remote working machine 1. As illustrated in FIG. 5, the display controller 31b causes the display 34 to display a second captured image 70b in a display screen G2. The second captured image 70b is an image of an area behind the remote working machine 1 captured through the camera 26c2 (FIG. 2) installed on the rear portion of the machine body 3.

As illustrated in FIGS. 4 and 5, the display 34, based on display control by the display controller 31b (e.g., a display control signal), displays the first captured image 70a, the second captured image 70b, and a path object 90 indicating an expected travel path of the remote working machine 1 such that the path object 90 is superimposed on the captured image. The path object 90 includes a travel object 91 indicating an expected movement path of the traveling device 7 of the remote working machine 1 and a work object 92 indicating an expected movement path of the working device 2 of the remote working machine 1.

The travel object 91 includes first travel objects 91a (see FIG. 4) indicating expected movement paths of the front wheels 7F of the traveling device 7 and second travel objects 91b (see FIG. 5) indicating expected movement paths of the rear wheels 7R of the traveling device 7.

The first travel objects 91a are, as illustrated in FIG. 4, image objects (image data) indicating paths along which the front wheels 7F of the traveling device 7 move (pass) when the front wheels 7F of the traveling device 7 continue to travel at a current angle of steering of the machine body 3, that is, predicted paths of the front wheels 7F of the traveling device 7. The second travel objects 91b are, as illustrated in FIG. 5, image objects (image data) indicating paths along which the rear wheels 7R of the traveling device 7 move (pass) when the rear wheels 7R of the traveling device 7 continue to travel at a current angle of steering of the machine body 3, that is, predicted paths of the rear wheels 7R of the traveling device 7.

The work object 92 is an image object (image data) indicating paths along which opposite sides defining a maximum width of the working device 2 move (pass) when the working device 2 continues to travel at a current angle of steering of the machine body 3, that is, predicted paths of the maximum width of the working device 2. The work object 92 includes a first work object 92a indicating an expected movement path of a left one of the opposite sides of the working device 2 in a width direction and a second work object 92b indicating an expected movement path of a right one of the opposite sides of the working device 2 in the width direction.

Specifically, the controller 31 acquires the angle of steering of the machine body 3 (detection information) and size information on the traveling device 7 of the remote working machine 1 and the working device 2 from the remote working machine 1 through the first communication unit 33. The size information on the traveling device 7 and the working device 2 may be stored in the storage 32 of the remote device 30 in advance.

The controller 31 defines (calculates), based on the current angle of steering of the machine body 3 and the size information on the traveling device 7 and the working device 2, the expected movement paths of the front wheels 7F, the rear wheels 7R, and the opposite sides of the working device 2. The display controller 31b converts the results of calculation of the expected movement paths into a data format (object) that can be displayed on the display 34, and displays the object as the path object 90 such that the path object 90 is superimposed on the first captured image 70a and the second captured image 70b. As illustrated in FIGS. 4 and 5, the first captured image 70a, the second captured image 70b, the first travel objects 91a, the second travel objects 91b, and the work object 92 are displayed such that the objects are superimposed on the captured images. For example, the display controller 31b identifies, as reference positions, the positions of the front wheels 7F, the rear wheels 7R, and the opposite sides defining the maximum width of the working device 2 in the display screen G through image recognition, converts the results of calculation of the expected movement paths into image objects extending from the reference positions on the display screen G to generate the path object 90, and causes the first captured image 70a, the second captured image 70b, and the path object 90 to be displayed such that the path object 90 is superimposed on the captured images.

The remote manipulator 35 (shift lever 35d) is configured to accept a first operation of switching the direction of travel of the traveling device 7 to the forward direction (indicated by arrow Y1 in FIG. 2), a second operation of switching the direction of travel of the traveling device 7 to the rearward direction (indicated by arrow Y2 in FIG. 2), and a third operation, which is different from the first and second operations, of switching the traveling device 7 to neutral.

The display 34 switches between displaying and not displaying the path object 90 (the travel object 91 and the work object 92) in response to an operation accepted by the remote manipulator 35. The display 34 switches between displaying and not displaying the path object 90 in response to an operation of switching the direction of travel of the traveling device 7 accepted by the remote manipulator 35. More specifically, the display 34 displays the first captured image 70a and the first travel objects 91a in response to the first operation performed on the remote manipulator 35, and displays the second captured image 70b and the second travel objects 91b in response to the second operation performed on the remote manipulator 35. In response to the third operation performed on the remote manipulator 35, the display 34 does not display, or hides, the travel object 91 and displays the work object 92. In response to the third operation performed on the remote manipulator 35, the display 34 may hide the travel object 91 and the work object 92 or may display the travel object 91 and the work object 92. Additionally, in a case that the working device 2 is not attached, the display 34 does not display the work object 92.

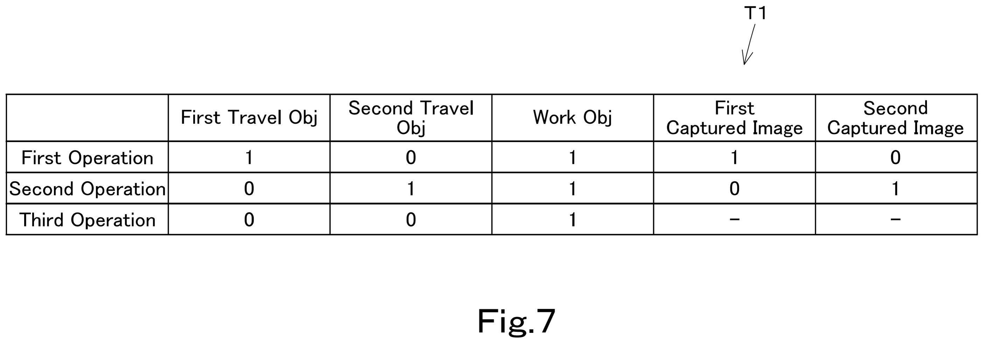

The storage 32 stores a table T1 in which the operations on the remote manipulator 35 are associated with the objects to be displayed on the display 34. FIG. 7 illustrates an example of the table T1. In FIG. 7, "Obj" is an abbreviation for "object". In the table T1, "0" indicates to hide (not to display), and "1" indicates to display. In the table T1, "-" indicates not to change the state of being displayed or not displayed (keep the state prior to the operation).

When the remote manipulator 35 (shift lever 35d) accepts any one of the first operation, the second operation, and the third operation, the controller 31 transmits a corresponding remote manipulation command signal to the remote working machine 1. The display controller 31b refers to the table T1 to perform control for switching between displaying and not displaying the path object 90, the first captured image 70a, and the second captured image 70b.

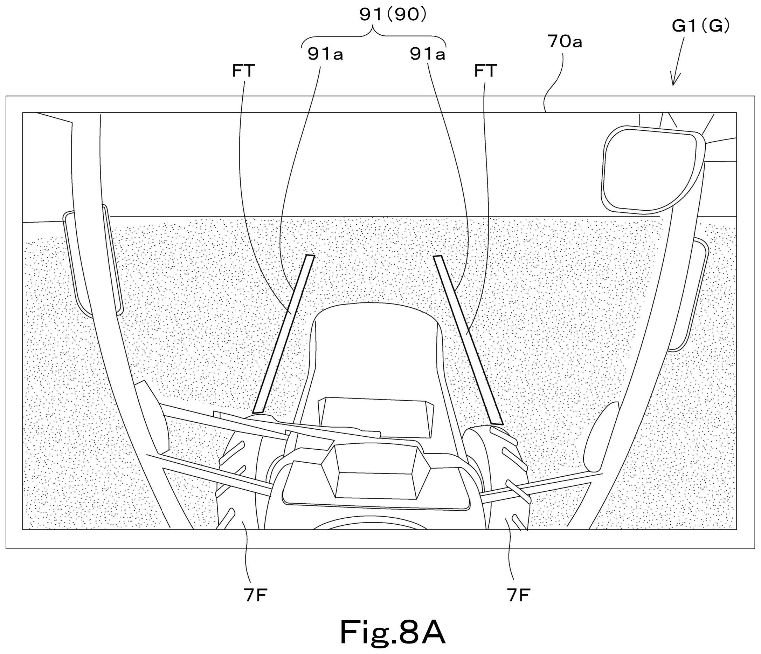

The display 34 is configured to display the path object 90 in a manner that corresponds to a manner in which a ground surface slopes. FIG. 8A is a diagram illustrating an example of the display screen G1 in which the manner in which the path object 90 is displayed is changed based on the manner in which the ground surface slopes. As illustrated in FIG. 8A, the display 34 displays the path object 90 in the manner that indicates the manner in which the ground surface slopes on the expected travel path extending from a location of the remote working machine 1. In FIG. 8A, an angle θ of slope of the ground surface on the expected travel path extending from the location of the remote working machine 1 is less than a threshold angle θth. Therefore, the whole of the travel object 91 is a range FT, and the range FT of the entire travel object 91 is displayed in a manner that indicates a flat ground surface (for example, in green).

The display 34 is configured to selectively display, as the path object 90, at least one of the travel object 91 or the work object 92. In the example illustrated in FIG. 8A, the display 34 selects and displays the travel object 91. For example, the display 34 displays the travel object 91 based on a first selection instruction (a selection instruction for the travel object 91 given by the human remote operator).

The display 34 may display the work object 92 based on a second selection instruction (a selection instruction for the work object 92 given by the human remote operator). The display 34 may display the travel object 91 and the work object 92 based on a third selection instruction (a selection instruction for the travel object 91 and the work object 92 given by the human remote operator).

Additionally, the display 34 may be configured to display the travel object 91 when no working devices 2 are attached, and display the work object 92 when the working device 2 is attached. Specifically, the in-vehicle controller 21 acquires the state of the working device 2 (for example, a type of the working device 2 and an attached or detached state of the working device 2) detected by the third detector 28 via the in-vehicle network such as CAN and transmits the state to the remote device 30.

Therefore, the controller 31 of the remote device 30 can determine the state of the working device 2 of the remote working machine 1 (for example, attachment or detachment of the working device 2 and the type of the working device 2). The display 34 displays the travel object 91 in response to a not-attached signal (i.e., a signal indicating that no working devices 2 are attached) from the controller 31, assuming that no working devices 2 are attached. On the other hand, the display 34 displays the work object 92 in response to an attachment signal (i.e., a signal indicating that the working device 2 is attached) from the controller 31, assuming that the working device 2 is attached.

The display 34 may give priority to either display based on the above-described selection instruction (the first to third selection instructions) or display based on the above-described attachment or detachment of the working device 2.

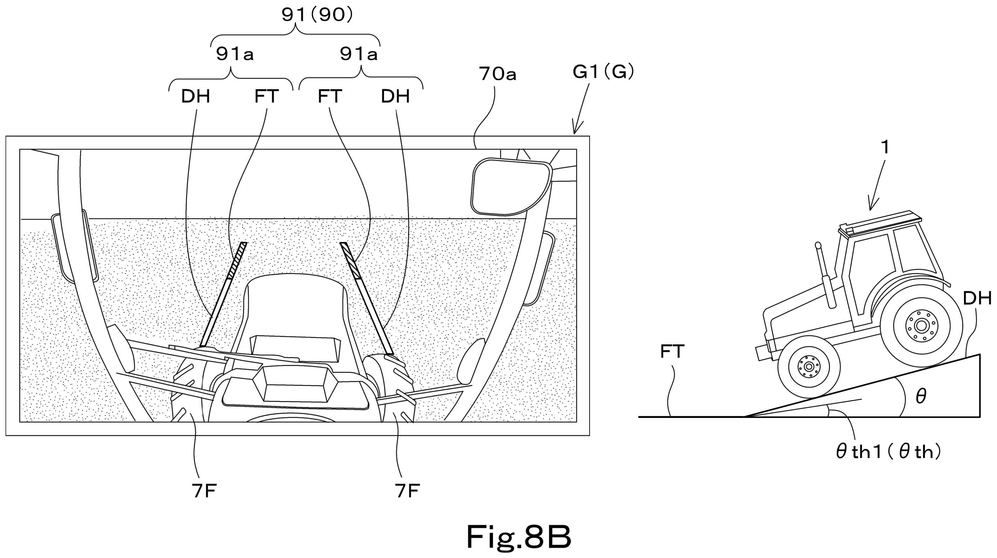

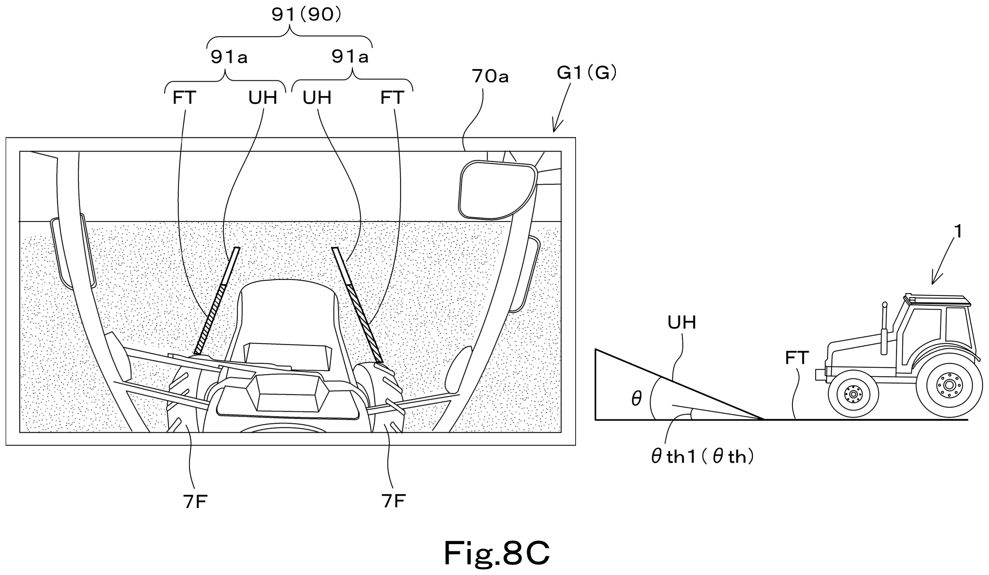

How the display 34 changes, based on the manner in which the ground surface slopes, the manner in which the path object 90 is displayed will now be described in detail with reference to FIGS. 8B and 8C. FIG. 8B is a diagram for explaining the path object 90 displayed on the display screen G1 when the remote working machine 1 is traveling from a downhill slope to a flat ground surface. FIG. 8C is a diagram for explaining the path object 90 displayed on the display screen G1 when the remote working machine 1 is traveling from the flat ground surface to an uphill slope.

As illustrated in FIGS. 8B and 8C, the display 34 changes the manner in which the travel object 91, serving as the path object 90, is displayed based on the angle θ of slope of the ground surface and the predetermined threshold angle θth.

Specifically, the second detector 26, which includes the laser sensors 26a (LiDAR), the ultrasonic sensors 26b, and the cameras 26c, is configured to detect the manner in which the ground surface in the direction of travel of the remote working machine 1 slopes. For example, the second detector 26 acquires three-dimensional position information including three-dimensional coordinate positions of a plurality of locations on the ground surface in the direction of travel of the remote working machine 1 in a local coordinate system having the remote working machine 1 (strictly speaking, the second detector 26) as an origin. The in-vehicle controller 21 acquires the information (three-dimensional position information) indicating the manner in which the ground surface slopes detected by the second detector 26 via the in-vehicle network such as CAN and transmits the information to the remote device 30.

Therefore, the controller 31 (display controller 31b) of the remote device 30 can calculate a manner in which the travel object 91 slopes on the ground surface by matching the information (three-dimensional position information) indicating the manner in which the ground surface slopes with position information on the travel object 91 (position information on the expected travel path extending from the location of the remote working machine 1). The display 34 may perform the above-described calculation. The controller 31 (display controller 31b) and the display 34 can classify the travel object 91 based on the manner in which the ground surface slopes. In other words, the controller 31 and the display 34 can classify the travel object 91 into a flat range, a downhill slope range, and an uphill slope range. The display 34 displays, based on a calculation result from the controller 31 (display controller 31b) (or its calculation result), the travel object 91 reflecting the manner in which the ground surface slopes (for example, a flat ground surface, a downhill slope, or an uphill slope).

For example, as illustrated in FIG. 8B, the display 34 displays, in the travel object 91, a downhill slope range DH in which the angle θ of slope of the ground surface is equal to or greater than the threshold angle θth in a manner that indicates the downhill slope (e.g., in blue). The display 34 displays, in the travel object 91, the range FT in which the angle θ of slope of the ground surface is less than the threshold angle θth in a manner that indicates the flat ground surface (e.g., in green).

For example, as illustrated in FIG. 8C, the display 34 displays, in the travel object 91, an uphill slope range UH in which the angle θ of slope of the ground surface is equal to or greater than the threshold angle θth in a manner that indicates the uphill slope (e.g., in red). The display 34 displays the range FT, in which the angle θ of slope of the ground surface is less than the threshold angle θth, in the travel object 91 in a manner that indicates the flat ground surface (e.g., in green).

The display 34 may be configured to, when the angle θ of slope of the ground surface is equal to or greater than the threshold angle θth, display a warning and/or output a warning sound in addition to changing the manner in which the path object 90 is displayed. Examples of a warning to be displayed include an icon warning. Examples of a warning sound to be output include a beep and an audio output indicating that the angle θ of slope of the ground surface has reached a warning angle.

Additionally, the threshold angle θth may include a first threshold angle θth1 including a first angle (e.g., 7°) and a second angle (e.g., 15°) greater than the first angle. Examples of the second angle (e.g., 15°) include an angle of slope in use of ramps. The value of the first angle (e.g., 7°) and that of the second angle (e.g., 15°) are not limited to these examples.

Specifically, in a case that the ground surface is a paved surface, the display 34 displays the path object 90 (e.g., the travel object 91) in a first manner (in blue or red described above) when the angle θ of slope of the ground surface is equal to or greater than the first angle (e.g., 7°). The display 34 may display a warning and/or output a warning sound when the angle θ of slope of the ground surface is equal to or greater than the first angle (e.g., 7°).

On the other hand, when the angle θ of slope of the ground surface is equal to or greater than the second angle (e.g., 15°), the display 34 displays the path object 90 (e.g., the travel object 91) in a second manner (for example, in a color different from that in the first manner). For example, the second manner may use colors having different intensities of blue and red (dark blue and dark red), colors with different brightness levels, or fluorescent colors.

Additionally, when the angle θ of slope of the ground surface is equal to or greater than the second angle (e.g., 15°), the display 34 may display a warning and/or output a warning sound in addition to displaying the path object 90 (e.g., the travel object 91) in the second manner, the warning and the warning sound indicating that the angle θ of slope of the ground surface is equal to or greater than the second angle (e.g., 15°).

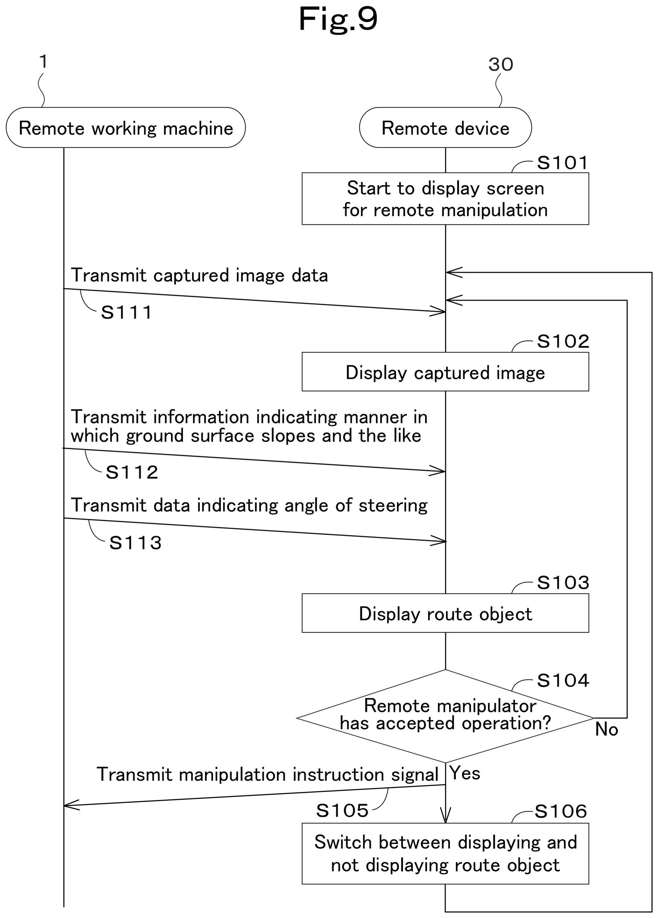

FIG. 9 is a flowchart illustrating a display process for the display screen G in the remote device 30. The in-vehicle controller 21 executes the program stored in the storage 22, thus executing steps in a left portion of the flowchart of FIG. 9. The controller 31 of the remote device 30 executes the program stored in the storage 32, thus executing steps in a right portion of the flowchart of FIG. 9.

When the input interface 36 accepts an instruction to start remote manipulation of the remote working machine 1, the controller 31 of the remote device 30 starts control for remote manipulation of the remote working machine 1. As illustrated in FIG. 9, when the controller 31 starts control for remote manipulation of the remote working machine 1, the display controller 31b starts an operation of causing the display 34 to display the display screen G (S101).

The in-vehicle controller 21 of the remote working machine 1 causes the second communication unit 23 to transmit the first captured image 70a and the second captured image 70b captured by the cameras 26c to the remote device 30 (S111).

When the first communication unit 33 of the remote device 30 receives the first captured image 70a and the second captured image 70b, the display controller 31b causes the display 34 to display, based on the definition in the table T1, the first captured image 70a or the second captured image 70b on the display screen G (S102).

The in-vehicle controller 21 causes the second communication unit 23 to transmit information (three-dimensional position information) indicating a manner in which a ground surface slopes and information indicating a state of the working device 2 (for example, attachment or detachment of the working device 2 and a type of the working device 2) to the remote device 30 (S112).

The in-vehicle controller 21 causes the second communication unit 23 to transmit the angle of steering of the remote working machine 1 to the remote device 30 (S113). The in-vehicle controller 21 sequentially executes steps S111 to S113 at predetermined intervals or at predetermined timings. Steps S111 to S113 may be executed simultaneously or sequentially in any order.

As illustrated in FIGS. 8B and 8C, the display 34 displays the path object 90 in a manner that corresponds to the manner in which the ground surface slopes (S103).

Specifically, when the first communication unit 33 of the remote device 30 receives the angle of steering, the display controller 31b defines (calculates) an expected movement path (i.e., an expected movement path of the traveling device 7 and an expected movement path of the working device 2). In this case, the travel object 91 is selected as the path object 90 to be displayed. The display controller 31b refers to the table T1 to determine a captured image and the travel object 91, and defines (calculates) the expected movement path of the traveling device 7 (i.e., the path of the travel object 91).

Upon receiving, at the first communication unit 33 of the remote device 30, the information (three-dimensional position information) indicating the manner in which the ground surface slopes, the display controller 31b defines (calculates) a manner in which the travel object 91 is displayed and that corresponds to the manner in which the ground surface slopes. For example, the display controller 31b calculates a manner in which the travel object 91 on the ground surface slopes by matching the information (three-dimensional position information) indicating the manner in which the ground surface slopes with position information on the travel object 91 (position information on an expected travel path extending from the location of the remote working machine 1), and calculates the manner in which the travel object 91 is displayed. A calculation result, indicating the manner in which the travel object 91 is displayed, from the display controller 31b is displayed on the display screen G, as illustrated in FIGS. 8B and 8C.

In the display screens G illustrated in FIGS. 8B and 8C, the travel object 91 is displayed in a manner that corresponds to the manner in which the ground surface slopes. This does not imply any limitation. For example, the work object 92 may be displayed in a manner that corresponds to the manner in which the ground surface slopes. The travel object 91 and the work object 92 may be displayed in a manner that corresponds to the manner in which the ground surface slopes.

As illustrated in FIG. 9, the controller 31 determines whether the remote manipulator 35 has accepted an operation (S 104). In response to determining that the remote manipulator 35 has accepted an operation (Yes at S104), the controller 31 transmits a corresponding remote manipulation instruction signal to the remote working machine 1 (S105). The controller 31 refers to the table T1 to perform an operation of switching between displaying and not displaying the path object 90 (S106). Upon executing step S106, the controller 31 returns to S102.

A transition of the display screen G based on an operation accepted by the remote manipulator 35 will now be described with reference to FIGS. 4 to 6.

When the human remote operator performs the first operation on the shift lever 35d, the display controller 31b refers to the table T1 and causes, as illustrated in FIG. 4, the first captured image 70a of an area in front of the remote working machine 1, the first travel objects 91a indicating expected movement paths of the front wheels 7F, and the work object 92 indicating an expected movement path of the working device 2 to be displayed on the display screen G1. On the display screen G1, the first travel objects 91a, the work object 92, and the first captured image 70a are displayed such that the objects are superimposed on the captured image. Additionally, the first travel objects 91a in FIG. 4 are displayed in a manner that corresponds to a manner in which a ground surface slopes, as illustrated in FIGS. 8B and 8C. Correspondingly, the display 34 may also display the work object 92 in a manner that corresponds to the manner in which the ground surface slopes.

When the human remote operator performs the second operation on the shift lever 35d, the display controller 31b refers to the table T1 and causes, as illustrated in FIG. 5, the second captured image 70b of an area behind the remote working machine 1, the second travel objects 91b indicating expected movement paths of the rear wheels 7R, and the work object 92 indicating an expected movement path of the working device 2 to be displayed on the display screen G2. On the display screen G2, the second travel objects 91b and the work object 92 are displayed such that they are superimposed on the second captured image 70b. The display 34 may display at least the second travel objects 91b or the work object 92 in a manner that corresponds to the manner in which the ground surface slopes.

When the human remote operator performs the third operation on the shift lever 35d, the display controller 31b refers to the table T1 and causes, as illustrated in FIG. 6, the travel object 91 (the first travel objects 91a and the second travel objects 91b) to be hidden and the work object 92 indicating the expected movement path of the working device 2 to be displayed on the display screen G3. For example, the display screen G3 represents a case where the human remote operator has performed the third operation on the shift lever 35d during display of the display screen G1 (the first captured image 70a) on the display 34. On the display screen G3, the first captured image 70a, which has been displayed before the third operation is performed, remains displayed, the work object 92 is displayed, and the travel object 91 is not displayed. The display 34 may display the work object 92 in a manner that corresponds to the manner in which the ground surface slopes.

In the above-described example embodiment, the display controller 31b performs control for switching between displaying and not displaying the first captured image 70a, the second captured image 70b, and the path object 90 in response to the remote manipulator 35 accepting any one of the first to third operations. This does not imply any limitation. For example, the display controller 31b may perform, in response to an operation on the switch operation actuator 36a, control for switching between displaying and not displaying the first captured image 70a, the second captured image 70b, and the path object 90.

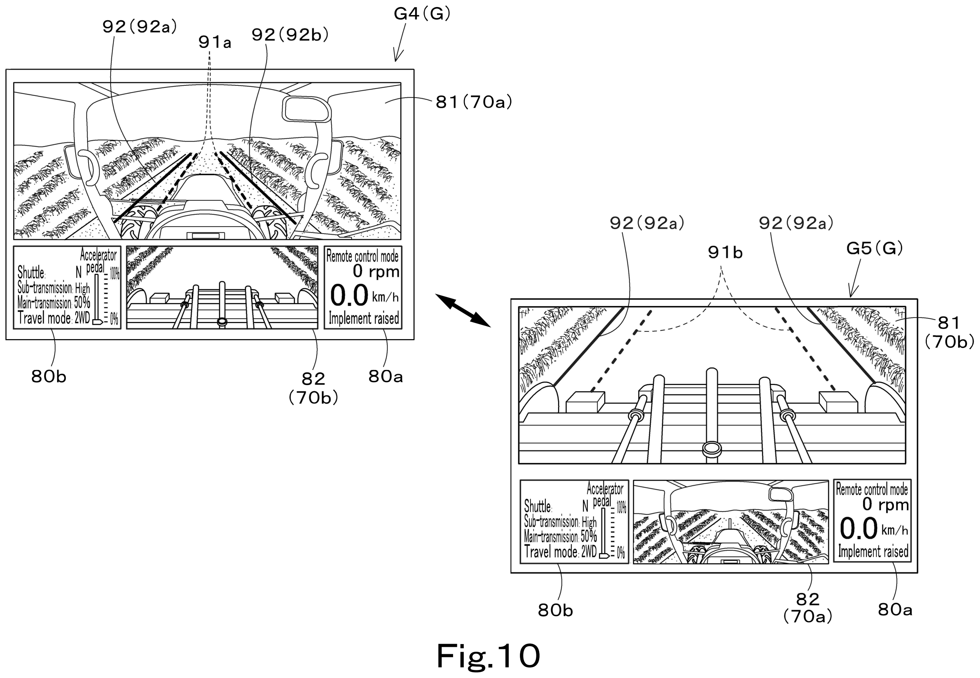

FIG. 10 is a diagram illustrating other examples of the display screen G. For example, as illustrated in display screens G4 and G5 in FIG. 10, the display controller 31b causes the display 34 to display a first state display window 80a and a second state display window 80b that represent a state of the remote working machine 1 detected by the first detector 25 and the in-vehicle controller 21 of the remote working machine 1. The first state display window 80a displays whether or not the remote working machine 1 is traveling under remote control (remote operation), a speed of travel of the remote working machine 1 (machine body 3), a rotation speed of the prime mover 4, and the like. Additionally, the second state display window 80b displays the direction of travel of the traveling device 7 (forward, rearward, or neutral), a state of the auxiliary transmission section of the transmission 5 (e.g., a speed stage), a state of the main-transmission section (e.g., a speed stage), a travel mode of the remote working machine 1 (e.g., 2WD), and an operation amount of the accelerator pedal.

The display 34 includes a first image display section 81 and a second image display section 82. For example, the first image display section 81 is larger than the second image display section 82. The first image display section 81 serves as a main display screen. The second image display section 82 serves as a sub-display screen. Therefore, the first image display section 81 displays a captured image that is intended to receive more attention by the human remote operator than an image in the second image display section 82. The display controller 31b causes the first image display section 81 to display one of two captured images selected from images captured through the multiple cameras 26c provided in and on the remote working machine 1 and causes the second image display section 82 to display the other captured image.

As illustrated in FIG. 10, in the display screen G4, the first image display section 81 displays the first captured image 70a showing an area in front of the remote working machine 1, and the second image display section 82 displays the second captured image 70b showing an area behind the remote working machine 1. In the display screen G5, the first image display section 81 displays the second captured image 70b, and the second image display section 82 displays the first captured image 70a. It should be noted that the display screens G4 and G5 in FIG. 10 are merely examples, and the types of pieces of information to be displayed, the layout positions of the pieces of information, and the like are not limited thereto.

When an operation to display a front view is performed on the switch operation actuator 36a, as illustrated in an upper left portion of FIG. 10, the display 34 causes the first image display section 81 to display the first captured image 70a and the second image display section 82 to display the second captured image 70b, regardless of the first operation and the second operation on the remote manipulator 35. When an operation to display a rear view is performed on the switch operation actuator 36a, as illustrated in a lower right portion of FIG. 10, the display 34 causes the first image display section 81 to display the second captured image 70b and the second image display section 82 to display the first captured image 70a, regardless of the first operation and the second operation on the remote manipulator 35. Since the path object 90 in FIG. 10 is as described above, the description thereof will be omitted.

### Second Example Embodiment

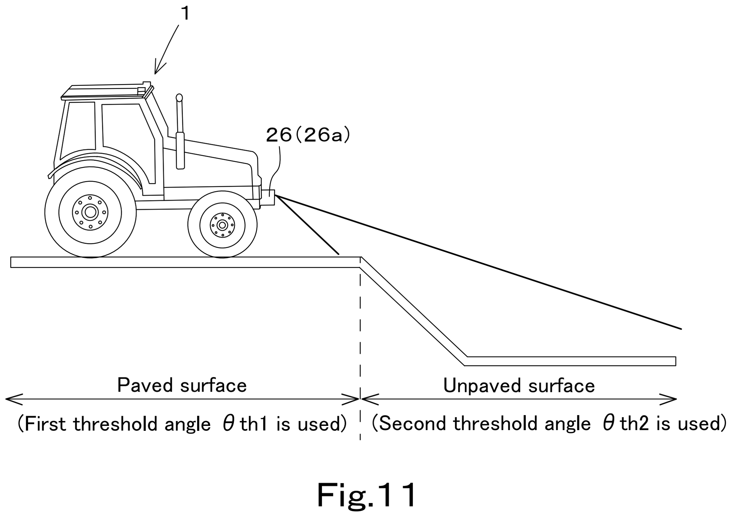

FIG. 11 is a diagram explaining how to change the threshold angle θth depending on whether the ground surface is a paved surface or an unpaved surface in a second example embodiment. In the second example embodiment, the display 34 is configured to change the threshold angle θth depending on whether the ground surface of a place to which the remote working machine 1 is traveling is a paved surface or an unpaved surface, as illustrated in FIG. 11. In the second example embodiment, the difference in configuration between the second example embodiment and the above-described first example embodiment will be described, and the description of the same elements as those in the first example embodiment will be omitted.

In FIG. 11, the second detector 26 is the laser sensor 26a (LiDAR), the ultrasonic sensor 26b, or the camera 26c, and is configured to detect (determine) whether the ground surface in the direction of travel of the remote working machine 1 is a paved surface or an unpaved surface. For example, the paved surface has a flat road surface condition suitable for travel of vehicles, working machines, and the like. On the other hand, the unpaved surface has an uneven road surface condition in which plants, irregularities of the ground surface, and the like are present over a wide area. The second detector 26 determines, based on the difference between those surface conditions, whether the ground surface is a paved surface or an unpaved surface. Additionally, the second detector 26 may perform pattern matching between an image captured by the camera 26c and at least one type of reference image indicating a paved surface to determine whether the ground surface is a paved surface or an unpaved surface. Additionally, the accuracy of detection may be improved by using two or more combinations of the laser sensor 26a (LiDAR), the ultrasonic sensor 26b, and the camera 26c. Additionally, the storage 32 of the remote device 30 may store map information including the position of the remote working machine 1 in advance, and the controller 31 may determine, based on the map information, whether the ground surface in the direction of travel of the remote working machine 1 is a paved surface or an unpaved surface.

The display 34 uses the first threshold angle θth1 as the threshold angle θth when the ground surface is a paved surface, and uses the second threshold angle θth2 as the threshold angle θth when the ground surface is an unpaved surface, the second threshold angle θth2 being less than the first threshold angle θth1. For example, unpaved surfaces (including agricultural fields) are considered to be more likely to collapse than paved surfaces. Therefore, when the first threshold angle θth1 for a paved surface is, for example, 7°, the second threshold angle θth2 for an unpaved surface is set to a value that is half the first threshold angle θth1 (e.g., 7°), which is 3.5°. The specific values of the first threshold angle θth1 and the second threshold angle θth2 are not limited.

Additionally, the display 34 may use the second threshold angle θth2 as the threshold angle θth when the ground surface is a paved surface and the working device 2 is attached to the remote working machine 1 and/or the working device 2 is performing work.

Additionally, the controller 31 (display controller 31b) may determine, based on the type of the working device 2, whether to use, as the threshold angle θth, the first threshold angle θth1 or the second threshold angle θth2. For example, when the working device 2 is a towed implement (e.g., an agricultural trailer or a cultivator) that is in contact with an agricultural field (ground surface), the controller 31 (display controller 31b) uses the second threshold angle θth2 as the threshold angle θth. On the other hand, when the working device 2 is a non-towed implement (e.g., a spreader) that is not in contact with an agricultural field (ground surface), the controller 31 (display controller 31b) uses the first threshold angle θth1 as the threshold angle θth.

The display 34 may use a third threshold angle θth3 (e.g., 3°) less than the second threshold angle θth2 as the threshold angle θth when the ground surface is a paved surface and the working device 2 is attached to the remote working machine 1 and/or the working device 2 is performing work.

### Third Example Embodiment

A third example embodiment differs from the above-described first and second example embodiments in that the display 34 is configured to display the path object 90 including a steering object SB indicating a direction of steering performed using a remote steering element 35A (steering wheel 35a), and display the steering object SB in a manner that corresponds to a safe level of the direction of steering. In the third example embodiment, the difference in configuration between the third example embodiment and the above-described first and second example embodiments will be described, and the description of the same elements as those in the first and second example embodiments will be omitted.

As illustrated in FIG. 1, the remote manipulator 35 includes the remote steering element 35A to remotely steer the remote working machine 1. The remote steering element 35A is, for example, the steering wheel 35a.

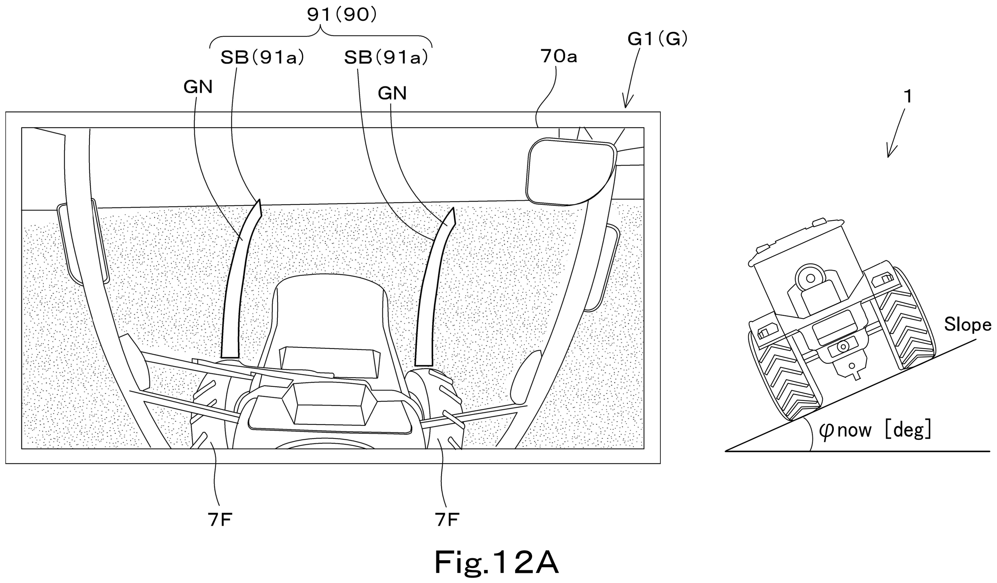

FIGS. 12A to 12C are diagrams each illustrating an example display screen in which the steering object SB is displayed in a manner that corresponds to the safe level of the direction of steering in the third example embodiment. As illustrated in FIGS. 12A to 12C, the display 34 displays the path object 90 including the steering object SB indicating the direction of steering performed using the remote steering element 35A, and displays the steering object SB in a manner that corresponds to the safe level of the direction of steering.

FIGS. 12A to 12C illustrate the steering object SB displayed when the human remote operator turns the remote steering element 35A (steering wheel 35a) to the right. The steering object SB is displayed such that the degree of curvature of the steering object SB increases (that is, the steering object SB bends more sharply) in proportion to an operation amount of the remote steering element 35A.

The controller 31 generates a remote manipulation signal based on an operation on the remote steering element 35A (steering wheel 35a) and causes the first communication unit 33 to transmit the remote manipulation signal to the remote working machine 1. Because the remote working machine 1 receives the remote manipulation signal and then performs an operation based on the remote manipulation signal, the remote working machine 1 starts to change the direction of steering with a slight delay relative to the display of the steering object SB.

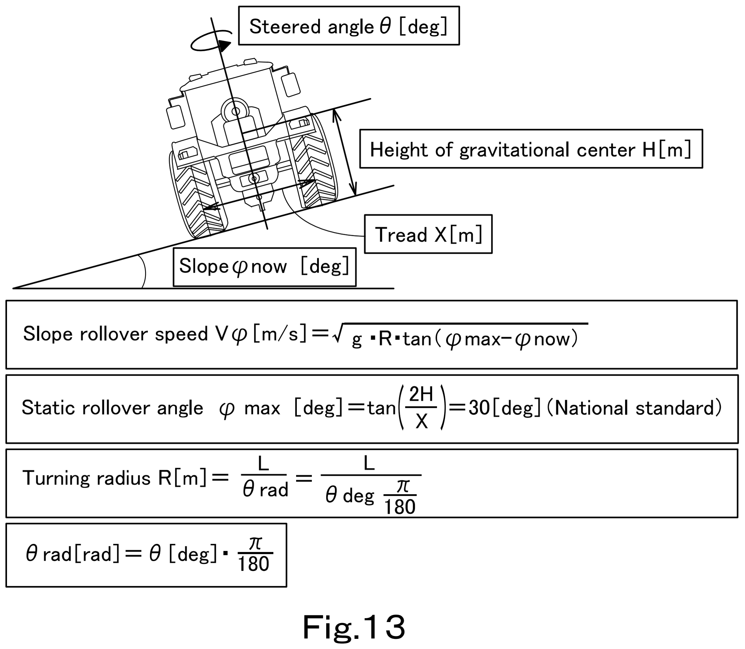

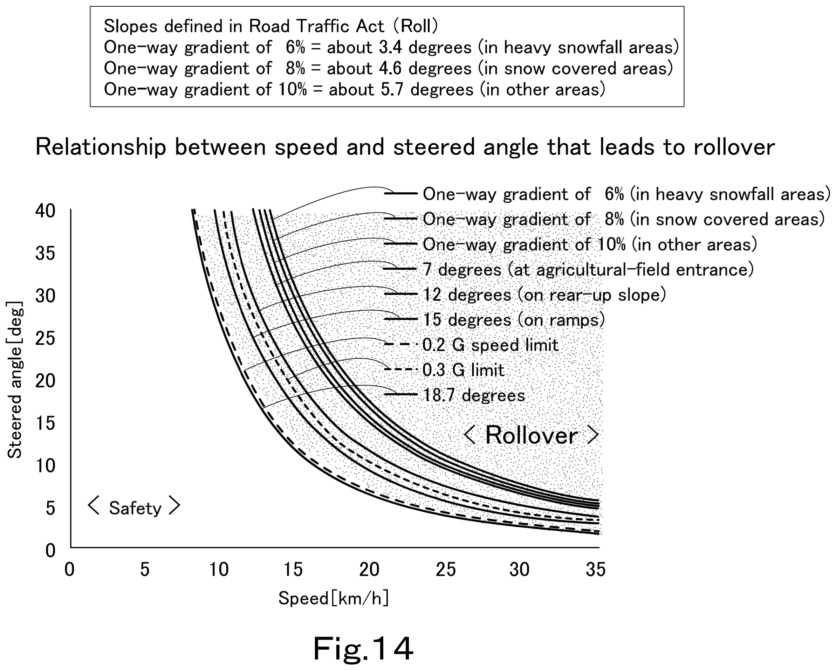

Displaying, by the display 34, the steering object SB in a manner that corresponds to the safe level of the direction of steering will now be described. FIG. 13 is a diagram explaining, for example, a slope rollover speed Vφ of the remote working machine 1 traveling across a sloping ground. FIG. 14 is a diagram illustrating slope-rollover-speed characteristics. The storage 32 stores the slope-rollover-speed characteristics of FIG. 14 in advance.

As illustrated in FIG. 13 and right portions of FIGS. 12A to 12C, it is assumed that the remote working machine 1 is traveling on a sloping ground in a direction intersecting a sloping direction of the sloping ground, that is, traveling across the sloping ground. In FIGS. 12A to 12C, the sloping ground has a slope with, for example, an angle φnow [deg]. The right portions of FIGS. 12A to 12C and FIG. 13 illustrate the remote working machine 1 traveling in a direction away from the viewer of FIGS. 12A to 12C and FIG. 13. The slope rollover speed Vφ can be calculated based on an arithmetic equation of the slope rollover speed Vφ, an arithmetic equation of a static rollover angle φmax, an expansion of a turning radius R illustrated in FIG. 13. In FIG. 13, L denotes the wheelbase (i.e., the distance between the center of the front wheel 7F and the center of the rear wheel 7R in side view of the remote working machine 1). The arithmetic equation of the slope rollover speed Vφ in FIG. 13 is used for multiple types of sloping grounds, thus obtaining the slope-rollover-speed characteristics of the multiple types of sloping grounds, as illustrated in FIG. 14.

The display 34 displays the steering object SB in a manner such that the safe level of the direction of steering decreases as a degree of proximity between a steered angle of the remote working machine 1 and an angle of remote steering performed using the remote steering element 35A increases, the steered angle of the remote working machine being obtained based on the slope-rollover-speed characteristics showing, as illustrated in FIG. 14, a relationship between a speed of the remote working machine 1 and the steered angle of the remote working machine 1 when the remote working machine 1 travels on a sloping ground in a direction intersecting a sloping direction of the sloping ground and the speed of the remote working machine 1.

In the third example embodiment, at S113 in FIG. 9, the in-vehicle controller 21 causes the second communication unit 23 to transmit the angle of steering and the speed of travel of the remote working machine 1 to the remote device 30 (S113). Thus, the remote device 30 can acquire the angle of steering of the remote working machine 1 and the speed of the remote working machine 1.

For example, when the remote working machine 1 is traveling across a sloping ground having a one-way gradient of 10% (= approximately 5.7°) illustrated in FIG. 14 at a speed of 15 km/h, the controller 31 (display controller 31b) calculates (determines), based on the slope-rollover-speed characteristics at a one-way gradient of 10% in FIG. 14 and the speed (15 km/h), that a steered angle that leads to rollover is approximately 27°. Then, the controller 31 (display controller 31b) changes the manner in which the steering object SB is displayed as the angle of steering performed using the remote steering element 35A (steering wheel 35a) approaches the steered angle that leads to rollover (approximately 27°).

The controller 31 (display controller 31b) determines that the remote working machine 1 is safe until the angle of steering performed using the remote steering element 35A (steering wheel 35a) reaches a value (approximately 18.9°) corresponding to a first predetermined proportion (e.g., 70%) of the steered angle that leads to rollover (approximately 27°). As illustrated in FIG. 12A, the controller 31 (display controller 31b) causes the display 34 to display the steering object SB in a first manner GN (e.g., in green).

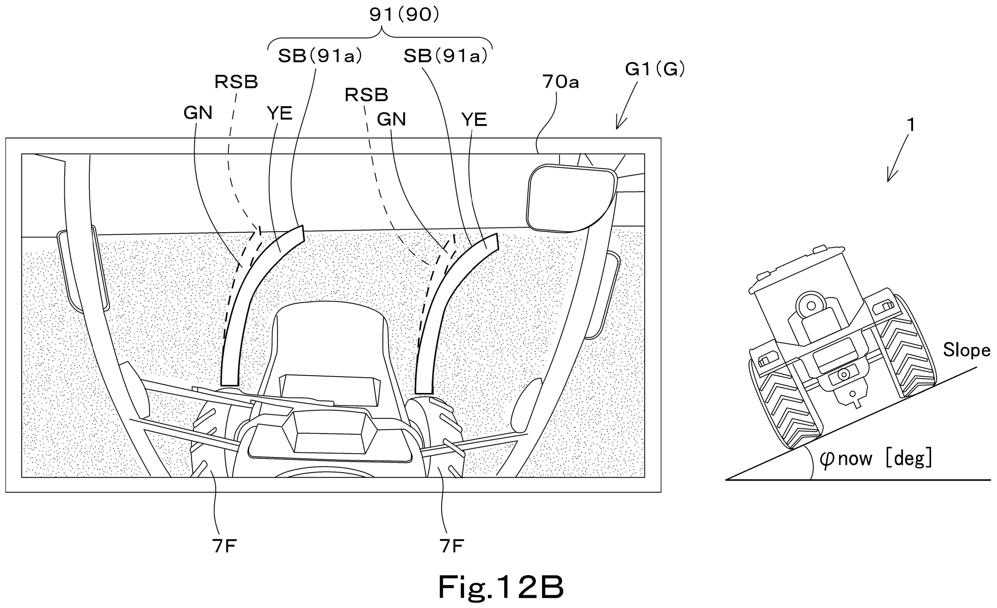

On the other hand, the controller 31 (display controller 31b) determines that caution is required while the angle of steering performed using the remote steering element 35A (steering wheel 35a) is equal to or greater than the value (approximately 18.9°) corresponding to the first predetermined proportion (e.g., 70%) of the steered angle that leads to rollover (approximately 27°) and less than a value (approximately 24.3°) corresponding to a second predetermined proportion (e.g., 90%) thereof. As illustrated in FIG. 12B, the controller 31 (display controller 31b) causes the display 34 to display the steering object SB in a second manner YE (e.g., in yellow).

As illustrated in FIG. 12B, when another direction of steering is more recommended than the direction of steering indicated by the steering object SB, the display 34 displays, together with the steering object SB, a recommended steering object RSB indicating the recommended direction of steering.

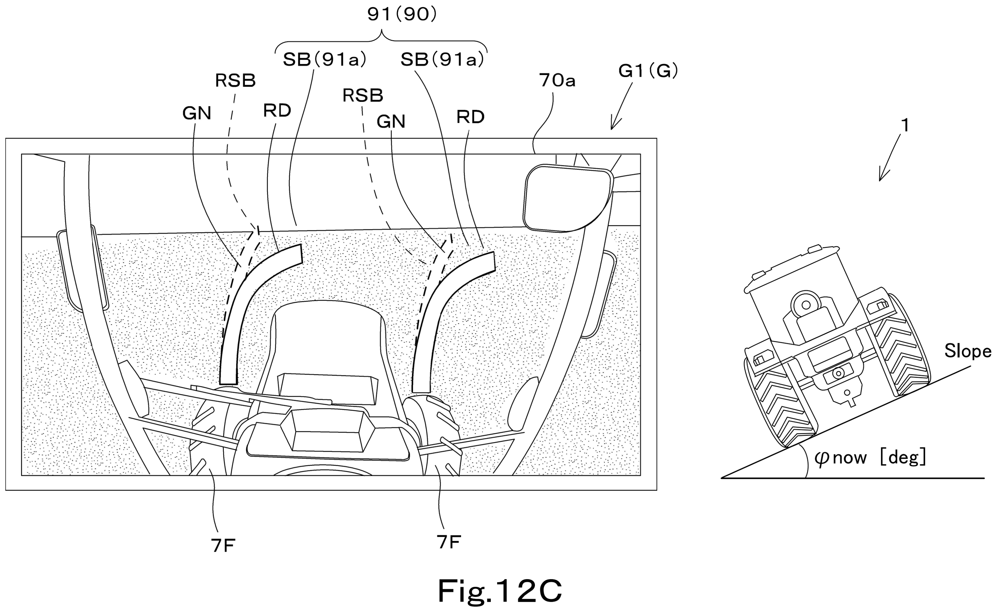

Furthermore, the controller 31 (display controller 31b) determines that warning is required while the angle of steering performed using the remote steering element 35A (steering wheel 35a) is equal to or greater than the value (approximately 24.3°) corresponding to the second predetermined proportion (e.g., 90%) of the steered angle that leads to rollover (approximately 27°) and less than a value (approximately 25.7°) corresponding to a third predetermined proportion (e.g., 95%) thereof. As illustrated in FIG. 12C, the controller 31 (display controller 31b) causes the display 34 to display the steering object SB in a third manner RD (e.g., in red). In this case, the remote working machine 1 performs at least one of deceleration or travel stop based on a restriction signal from the remote device 30 or an autonomous determination.

As illustrated in FIG. 12C, when another direction of steering is more recommended than the direction of steering indicated by the steering object SB, the display 34 displays, together with the steering object SB, the recommended steering object RSB indicating the recommended direction of steering.

The display 34 may perform the above-described determination, which is performed by the controller 31 (display controller 31b) as described above.

As illustrated in FIG. 1, the remote manipulator 35 includes a manual-operator-for-remote-speed-control 35B to be operated to remotely control the speed of the remote working machine 1 and a manual-operator-for-remote-brake-control 35C to be operated to remotely control braking of the remote working machine 1. The manual-operator-for-remote-speed-control 35B is, for example, the accelerator pedal 35b. The manual-operator-for-remote-brake-control 35C is, for example, the brake pedal 35c.

The display 34 is configured to, as an operation amount of the manual-operator-for-remote-speed-control 35B (accelerator pedal 35b) is reduced and/or an operation amount of the manual-operator-for-remote-brake-control 35C (brake pedal 35c) is increased, change the manner in which the steering object SB is displayed such that the safe level of the direction of steering indicated thereby increases. For example, in a state illustrated in FIG. 12B, as the operation amount of the manual-operator-for-remote-speed-control 35B is reduced and/or the operation amount of the manual-operator-for-remote-brake-control 35C is increased, the display 34 changes the manner in which the steering object SB is displayed in FIG. 12B such that the safe level of the direction of steering indicated thereby increases as illustrated in FIG. 12A.

The remote manipulator 35 is configured to, when the degree of proximity between the steered angle of the remote working machine 1 obtained based on the slope-rollover-speed characteristics and the angle of remote steering performed using the remote steering element 35A is greater than or equal to a predetermined threshold (that is, the degree of proximity is high), transmit, to the remote working machine 1, a remote command to reduce the speed of the remote working machine 1 and/or a remote command to brake the remote working machine 1. The display 34 is configured to change the manner in which the steering object SB is displayed such that the safe level of the direction of steering indicated thereby increases as the speed of the remote working machine 1 is reduced. For example, in the state illustrated in FIG. 12B, as the speed of the remote working machine 1 is reduced, the display 34 changes the manner in which the steering object SB is displayed in FIG. 12B such that the safe level of the direction of steering indicated thereby increases as illustrated in FIG. 12A.

### Variation

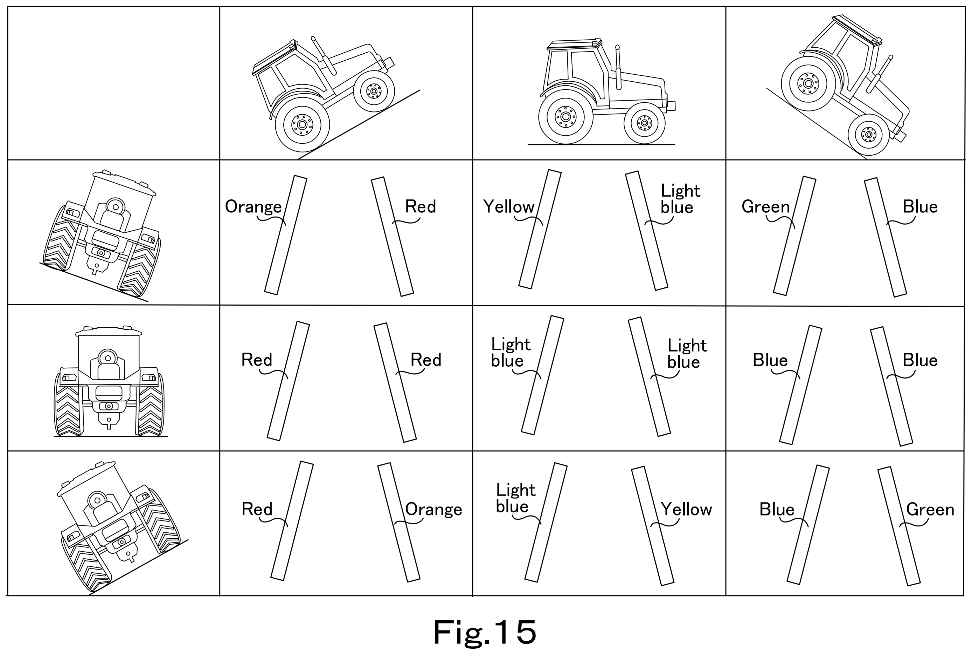

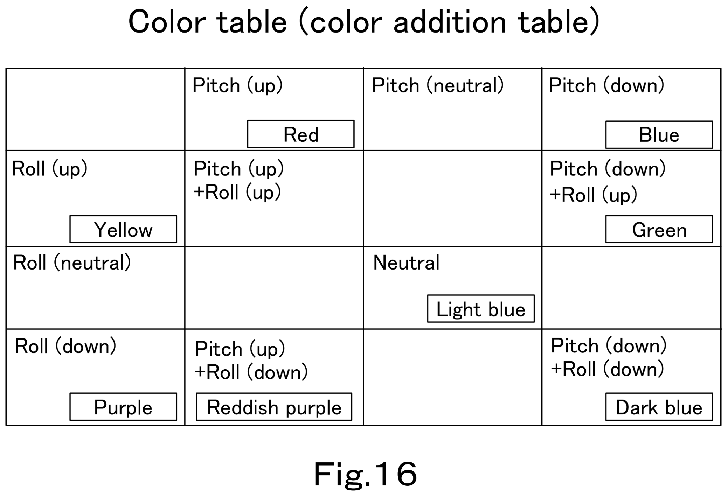

In a variation, as illustrated in FIGS. 15 and 16, the display 34 may display a pitch angle and a roll angle of the remote working machine 1 by using the path object 90. FIG. 15 is a diagram illustrating display examples of the path object 90 used to display a pitch angle and a roll angle of the remote working machine 1 in the variation. FIG. 16 is a table illustrating an example in which the degrees of pitch and roll of the remote working machine 1 are displayed with the path object 90. A case where the travel object 91 (including the left and right first travel objects 91a) is displayed as the path object 90 will be described below.

As illustrated in FIG. 15, when the remote working machine 1 is in a horizontal attitude, that is, when both the pitch angle and the roll angle are within respective specified values, the display 34 displays both the left and right first travel objects 91a in light blue by using the color table of FIG. 16.

As illustrated in FIG. 15, when the remote working machine 1 is level in the left-right direction but pitches up, the display 34 displays both the left and right first travel objects 91a in red. When the remote working machine 1 is level in the left-right direction but pitches down, the display 34 displays both the left and right first travel objects 91a in blue.

As illustrated in FIG. 15, when the remote working machine 1 is level in the front-rear direction but is tilted with its left side upward (roll-up), the display 34 displays the left first travel object 91a in yellow and the right first travel object 91a in light blue. When the remote working machine 1 is level in the front-rear direction but is tilted with its right side upward (roll-up), the display 34 displays the left first travel object 91a in light blue and the right first travel object 91a in yellow. Additionally, when the remote working machine 1 is level in the front-rear direction but is tilted with the left side downward (roll-down), the display 34 displays the left first travel object 91a in purple and the right first travel object 91a in light blue. When the remote working machine 1 is level in the front-rear direction but is tilted with the right side downward (roll-down), the display 34 displays the left first travel object 91a in light blue and the right first travel object 91a in purple.

As illustrated in FIG. 15, when the remote working machine 1 is tilted with the left side upward (roll-up) and pitches up, the display 34 displays the left first travel object 91a in orange and the right first travel object 91a in red. When the remote working machine 1 is tilted with the left side upward (roll-up) and pitches down, the display 34 displays the left first travel object 91a in green and the right first travel object 91a in blue. Additionally, when the remote working machine 1 is tilted with the right side upward (roll-up) and pitches up, the display 34 displays the left first travel object 91a in red and the right first travel object 91a in orange. When the remote working machine 1 is tilted with the right side upward (roll-up) and pitches down, the display 34 displays the left first travel object 91a in blue and the right first travel object 91a in green.

The display 34 may perform display in a manner other than that in FIGS. 15 and 16.

The main features of and advantages achieved by the remote device 30 in the above-described example embodiments are as follows.

(Item A1) A remote device 30 including a remote manipulator 35 to remotely manipulate a remote working machine 1, and a display 34 to display a captured image of an area in a direction of travel of the remote working machine 1 and a path object 90 indicating an expected travel path of the remote working machine 1 such that the path object 90 is superimposed on the captured image, wherein the display 34 is configured to display the path object 90 in a manner that corresponds to a manner in which a ground surface slopes.

Such a configuration allows the path object 90 indicating the expected travel path of the remote working machine 1 to be displayed in the manner that corresponds to the manner in which the ground surface slopes. This enables a human remote operator to recognize, based on the path object 90, the expected travel path of the remote working machine 1 and the manner in which the ground surface slopes and perform remote manipulation based on the expected travel path while recognizing the manner in which the ground surface slopes. Thus, the remote device 30 can assist the human remote operator in performing remote manipulation by displaying the path object 90 indicating the expected travel path of the remote working machine 1 and the manner in which the ground surface slopes. Additionally, the path object 90 can provide multiple display functions (simultaneously displaying both the expected travel path and the manner in which the ground surface slopes), thus allowing necessary information to be presented in a space-saving manner.

(Item A2) The remote device 30 according to item A1, wherein the display 34 is configured to display the path object 90 in the manner that indicates the manner in which the ground surface slopes on the expected travel path extending from a location of the remote working machine 1.

Such a configuration allows the human remote operator to recognize the manner in which the ground surface slopes on the expected travel path extending from the location of the remote working machine 1 by seeing the manner in which the path object 90 is displayed.

(Item A3) The remote device 30 according to item A2, wherein the display 34 is configured to change the manner in which the path object 90 is displayed based on an angle of slope θ of the ground surface and a predetermined threshold angle θth.

Such a configuration allows the path object 90 to be displayed in a manner based on the angle θ of slope of the ground surface relative to the threshold angle θth. This enables the path object 90 to be displayed in a suitable manner.

(Item A4) The remote device 30 according to item A3, wherein the display 34 is configured to, when the angle of slope θ of the ground surface is equal to or greater than the threshold angle θth, display a warning and/or output a warning sound in addition to changing the manner in which the path object 90 is displayed.

With such a configuration, when the angle θ of slope of the ground surface is equal to or greater than the threshold angle θth, a warning is displayed and/or a warning sound is output in addition to a change in the manner in which the path object 90 is displayed. This ensures that a notification is provided.

(Item A5) The remote device 30 according to item A3 or A4, wherein the display 34 is configured to change the threshold angle θth depending on whether the ground surface is a paved surface or an unpaved surface.

Such a configuration allows the threshold angle θth to be changed depending on whether the ground surface is a paved surface or an unpaved surface. Thus, the manner in which the path object 90 is displayed can be changed depending on whether the ground surface is a paved surface or an unpaved surface.

(Item A6) The remote device 30 according to item A5, wherein the display 34 is configured to use a first threshold angle θth1 as the threshold angle θth when the ground surface is a paved surface, and use a second threshold angle θth2 as the threshold angle θth when the ground surface is an unpaved surface, the second threshold angle θth2 being less than the first threshold angle θth1.

With such a configuration, when the ground surface is a paved surface, the threshold angle θth is changed to the first threshold angle θth1. When the ground surface is an unpaved surface, the threshold angle θth is changed to the second threshold angle θth2 less than the first threshold angle θth1. Thus, when the ground surface is an unpaved surface, the manner in which the path object 90 is displayed can emphasize attention more strongly than when the ground surface is a paved surface.

(Item A7) The remote device 30 according to item A6, wherein the display 34 is configured to use the second threshold angle θth2 as the threshold angle θth when the ground surface is a paved surface and a working device 2 is attached to the remote working machine 1 and/or the working device 2 is performing work.

With such a configuration, even when the ground surface is a paved surface, in the case where the working device 2 is attached to the remote working machine 1 and/or the working device 2 is performing work, the threshold angle θth is changed to the second threshold angle θth2. Thus, even when the ground surface is a paved surface, in the case where the working device 2 is attached to the remote working machine 1 and/or the working device 2 is performing work, the manner in which the path object 90 is displayed can emphasize attention more strongly in a manner similar to that when the ground surface is an unpaved surface.

(Item A8) The remote device 30 according to item A6, wherein the display 34 is configured to use a third threshold angle θth3 less than the second threshold angle θth2 as the threshold angle θth when the ground surface is a paved surface and a working device 2 is attached to the remote working machine 1 and/or the working device 2 is performing work.

With such a configuration, even when the ground surface is a paved surface, in the case where the working device 2 is attached to the remote working machine 1 and/or the working device 2 is performing work, the threshold angle θth is changed to the third threshold angle θth3 less than the second threshold angle θth2. Thus, even when the ground surface is a paved surface, in the case where the working device 2 is attached to the remote working machine 1 and/or the working device 2 is performing work, the manner in which the path object 90 is displayed can emphasize attention more strongly under more strict conditions than those when the ground surface is an unpaved surface.

(Item A9) The remote device 30 according to any one of items A1 to A8, wherein the path object 90 includes a travel object 91 indicating an expected movement path of a traveling device 7 of the remote working machine 1 and a work object 92 indicating an expected movement path of a working device 2 attached to the remote working machine 1, and the display 34 is configured to selectively display at least one of the travel object 91 or the work object 92.

Such a configuration allows the display 34 to selectively display at least one of the travel object 91 or the work object 92. Thus, the human remote operator can appropriately select and check the travel object 91 or the work object 92.

(Item A10) The remote device 30 according to item A9, wherein the display 34 is configured to display the travel object 91 when no working devices 2 are attached, and display the work object 92 when the working device 2 is attached.

Such a configuration allows the path object 90 to be displayed in an appropriate manner based on the presence or absence of the working device 2.

(Item A11) The remote device 30 according to item A6, wherein the first threshold angle θth1 includes a first angle and a second angle greater than the first angle, and the display 34 is configured to, in a case that the ground surface is a paved surface, display the path object 90 in a first manner when the angle of slope θ of the ground surface is equal to or greater than the first angle, and display the path object 90 in a second manner when the angle of slope θ of the ground surface is equal to or greater than the second angle.

With such a configuration, the manner in which the path object 90 is displayed changes depending on whether the angle θ of slope of the ground surface is equal to or greater than the first angle or the second angle, which is greater than the first angle. This can alert the human remote operator appropriately.

(Item A12) The remote device 30 according to item A11, wherein the display 34 is configured to, when the angle of slope θ of the ground surface is equal to or greater than the second angle, display a warning and/or output a warning sound in addition to displaying the path object 90 in the second manner.

With such a configuration, when the angle θ of slope of the ground surface is equal to or greater than the second angle, a warning is displayed and/or a warning sound is output in addition to the path object 90 displayed in the second manner. This can alert the human remote operator more reliably.

(Item A13) The remote device 30 according to any one of items A1 to A12, wherein the remote manipulator 35 includes a remote steering element 35A to remotely steer the remote working machine 1, and the display 34 is configured to display the path object 90 including a steering object SB indicating a direction of steering performed using the remote steering element 35A, and display the steering object SB in a manner that corresponds to a safe level of the direction of steering.

Such a configuration allows the steering object SB indicating the direction of steering performed using the remote steering element 35A to be displayed in the manner that corresponds to the safe level of the direction of steering. This enables the human remote operator to recognize the safe level of remote steering performed using the remote steering element 35A and perform remote manipulation.

(Item A14) The remote device 30 according to item A13, wherein the display 34 is configured to, when another direction of steering is more recommended than the direction of steering indicated by the steering object SB, display, together with the steering object SB, a recommended steering object RSB indicating the recommended direction of steering.

With such a configuration, when another direction of steering is more recommended than the direction of steering indicated by the steering object SB, the recommended steering object RSB indicating the recommended direction of steering is displayed. Therefore, when the recommended steering object RSB is displayed, the human remote operator can perform remote steering using the remote steering element 35A such that the steering object SB becomes closer to the recommended steering object RSB, thus performing recommended remote steering. This configuration can assist in recommended remote steering.

(Item A15) The remote device 30 according to item A13, wherein the display 34 is configured to display the steering object SB in a manner such that the safe level of the direction of steering decreases as a degree of proximity between a steered angle of the remote working machine 1 and an angle of remote steering performed using the remote steering element 35A increases, the steered angle of the remote working machine 1 being obtained based on (i) slope-rollover-speed characteristics showing a relationship between a speed of the remote working machine 1 and the steered angle of the remote working machine 1 when the remote working machine 1 travels on a sloping ground in a direction intersecting a sloping direction of the sloping ground and (ii) the speed of the remote working machine 1.

Such a configuration allows the display 34 to, when the remote working machine 1 traveling on the sloping ground in a direction intersecting the sloping direction of the sloping ground (that is, traveling across the sloping ground) is remotely steered, display the steering object SB in a manner such that the safe level of the direction of steering decreases as the degree of proximity between the steered angle of the remote working machine 1 obtained based on the slope-rollover-speed characteristics and the angle of remote steering performed using the remote steering element 35A increases. This enables the safe level of the direction of steering in remote steering to be displayed appropriately. Thus, the human remote operator can recognize the safe level of remote steering performed using the remote steering element 35A and perform remote manipulation.

(Item A16) The remote device 30 according to item A15, wherein the remote manipulator 35 includes a manual-operator-for-remote-speed-control 35B to be operated to remotely control the speed of the remote working machine 1 and a manual-operator-for-remote-brake-control 35C to be operated to remotely control braking of the remote working machine 1, and the display 34 is configured to, as an operation amount of the manual-operator-for-remote-speed-control 35B is reduced and/or as an operation amount of the manual-operator-for-remote-brake-control 35C is increased, change the manner in which the steering object SB is displayed such that the safe level of the direction of steering indicated thereby increases.

With such a configuration, the human remote operator can maintain the angle of remote steering performed using the remote steering element 35A by releasing the manual-operator-for-remote-speed-control 35B (accelerator) and/or by applying the manual-operator-for-remote-brake-control 35C (brake). Additionally, as the speed of the remote working machine 1 is reduced in the above-described remote operation, the manner in which the steering object SB is displayed is changed such that the safe level of the direction of steering indicated thereby increases. Thus, the human remote operator can recognize the safe level of remote steering of the remote working machine 1 reduced in speed by seeing the changed manner in which the steering object SB is displayed.

(Item A17) The remote device according to item A15, wherein the remote manipulator 35 is configured to, when the degree of proximity between the steered angle of the remote working machine 1 obtained based on the slope-rollover-speed characteristics and the angle of remote steering performed using the remote steering element 35A is greater than or equal to a threshold, transmit, to the remote working machine 1, a remote command to reduce the speed of the remote working machine 1 and/or a remote command to brake the remote working machine 1, and the display 34 is configured to change the manner in which the steering object SB is displayed such that the safe level of the direction of steering indicated thereby increases as the speed of the remote working machine 1 is reduced.

With such a configuration, when the degree of proximity between the steered angle of the remote working machine 1 obtained based on the slope-rollover-speed characteristics and the angle of remote steering performed using the remote steering element 35A is greater than or equal to a threshold (that is, the degree of proximity is high), the speed of the remote working machine 1 is reduced and/or the remote working machine 1 is braked even without an operation of reducing the angle of remote steering performed using the remote steering element 35A. This enables the remote working machine 1 to be prevented from rolling over. Additionally, as the speed of the remote working machine 1 is reduced, the manner in which the steering object SB is displayed is changed such that the safe level of the direction of steering indicated thereby increases. Thus, the human remote operator can recognize the safe level of remote steering of the remote working machine 1 reduced in speed by seeing the changed manner in which the steering object SB is displayed.

Note that the path object 90 may indicate the width of the remote working machine 1 or the working device 2. Note also that the manner in which the path object 90 is displayed may have any shape, such as a linear shape, a bar shape, a rectangular shape, or an arrow shape.

The work object 92 may be either an object indicating the width of the remote working machine 1 or an object indicating the width of the working device 2. The reason is that, in this case, the state of the remote working machine 1 may be displayed along either a guide line of the remote working machine 1 or a guide line of the working device 2.

Examples of a manner in which a ground surface slopes include a manner in which a paved ground surface slopes, a manner in which an unpaved ground surface slopes, and a manner in which a temporary path (including a sloping plate such as a ramp) slopes.

While example embodiments of the present invention have been described above, it is to be understood that variations and modifications will be apparent to those skilled in the art without departing from the scope and spirit of the present invention. The scope of the present invention, therefore, is to be determined solely by the following claims.

## Claims

1. A remote device (30) comprising:
a remote manipulator (35) to remotely manipulate a remote working machine (1); and
a display (34) to display a captured image of an area in a direction of travel of the remote working machine (1) and a path object (90) indicating an expected travel path of the remote working machine (1) such that the path object (90) is superimposed on the captured image; wherein
the display (34) is configured to display the path object (90) in a manner that corresponds to a manner in which a ground surface slopes.

2. The remote device (30) according to claim 1, wherein the display (34) is configured to display the path object (90) in the manner that indicates the manner in which the ground surface slopes on the expected travel path extending from a location of the remote working machine (1).

3. The remote device (30) according to claim 2, wherein the display (34) is configured to change the manner in which the path object (90) is displayed based on an angle of slope (θ) of the ground surface and a predetermined threshold angle (θth).

4. The remote device (30) according to claim 3, wherein the display (34) is configured to, when the angle of slope (θ) of the ground surface is equal to or greater than the threshold angle (θth), display a warning and/or output a warning sound in addition to changing the manner in which the path object (90) is displayed.

5. The remote device (30) according to claim 3 or 4, wherein the display (34) is configured to change the threshold angle (θth) depending on whether the ground surface is a paved surface or an unpaved surface.

6. The remote device (30) according to claim 5, wherein the display (34) is configured to use a first threshold angle (θth1) as the threshold angle (θth) when the ground surface is a paved surface, and use a second threshold angle (θth2) as the threshold angle (θth) when the ground surface is an unpaved surface, the second threshold angle (θth2) being less than the first threshold angle (θth1).

7. The remote device (30) according to claim 6, wherein the display (34) is configured to use the second threshold angle (θth2) as the threshold angle (θth) when the ground surface is a paved surface and a working device (2) is attached to the remote working machine (1) and/or the working device (2) is performing work.

8. The remote device (30) according to claim 6, wherein the display (34) is configured to use a third threshold angle (θth3) less than the second threshold angle (θth2) as the threshold angle (θth) when the ground surface is a paved surface and a working device (2) is attached to the remote working machine (1) and/or the working device (2) is performing work.

9. The remote device (30) according to any one of claims 1 to 8, wherein
the path object (90) includes a travel object (91) indicating an expected movement path of a traveling device (7) of the remote working machine (1) and a work object (92) indicating an expected movement path of a working device (2) attached to the remote working machine (1); and
the display (34) is configured to selectively display at least one of the travel object (91) or the work object (92).

10. The remote device (30) according to claim 9, wherein the display (34) is configured to display the travel object (91) when no working devices (2) are attached, and display the work object (92) when the working device (2) is attached.

11. The remote device (30) according to claim 6, wherein
the first threshold angle (θth1) includes a first angle and a second angle greater than the first angle; and
the display (34) is configured to, in a case that the ground surface is a paved surface, display the path object (90) in a first manner when the angle of slope (θ) of the ground surface is equal to or greater than the first angle, and display the path object (90) in a second manner when the angle of slope (θ) of the ground surface is equal to or greater than the second angle.

12. The remote device (30) according to claim 11, wherein the display (34) is configured to, when the angle of slope (θ) of the ground surface is equal to or greater than the second angle, display a warning and/or output a warning sound in addition to displaying the path object (90) in the second manner.

13. The remote device (30) according to any one of claims 1 to 12, wherein
the remote manipulator (35) includes a remote steering element (35A) to remotely steer the remote working machine (1); and
the display (34) is configured to display the path object (90) including a steering object (SB) indicating a direction of steering performed using the remote steering element (35A), and display the steering object (SB) in a manner that corresponds to a safe level of the direction of steering.

14. The remote device (30) according to claim 13, wherein the display (34) is configured to, when another direction of steering is more recommended than the direction of steering indicated by the steering object (SB), display, together with the steering object (SB), a recommended steering object (RSB) indicating the recommended direction of steering.

15. The remote device (30) according to claim 13, wherein the display (34) is configured to display the steering object (SB) in a manner such that the safe level of the direction of steering decreases as a degree of proximity between a steered angle of the remote working machine (1) and an angle of remote steering performed using the remote steering element (35A) increases, the steered angle of the remote working machine (1) being obtained based on (i) slope-rollover-speed characteristics showing a relationship between a speed of the remote working machine (1) and the steered angle of the remote working machine (1) when the remote working machine (1) travels on a sloping ground in a direction intersecting a sloping direction of the sloping ground and (ii) the speed of the remote working machine (1).
